# EUROPEAN PATENT SPECIFICATION

(11) **EP 3 489 860 B1**
(45) Date of publication and mention of the grant of the patent: **23.08.2023**
(21) Application number: 18208155.4
(22) Date of filing: 23.11.2018
(51) Int. Cl.: G06V 10/778, G06V 40/16

(54) **IMAGE DISPLAY APPARATUS AND METHOD OF OPERATING THE SAME**
BILDANZEIGEVORRICHTUNG UND VERFAHREN ZUM BETRIEB DAVON
AFFICHEUR D'IMAGES ET SON PROCÉDÉ DE FONCTIONNEMENT

(30) Priority: 28.11.2017 KR 20170161002
(43) Date of publication of application: 29.05.2019
(73) Proprietor: Samsung Electronics Co., Ltd., Gyeonggi-do 16677 (KR)
(72) Inventor: GARG, Jatin, Gyeonggi-do (KR); KOO, Jayoon, Gyeonggi-do (KR); AGARWAL, Vivek, Gyeonggi-do (KR); SANCHES, Ernesto, Gyeonggi-do (KR)
(74) Representative: Walaski, Jan Filip

(56) References cited:
- US-A1- 2013 265 451
- US-A1- 2016 092 750
- US-B1- 9 626 577
- CEN CHEN ET AL: "Locally Connected Deep Learning Framework for Industrial-scale Recommender Systems", WORLD WIDE WEB COMPANION, INTERNATIONAL WORLD WIDE WEB CONFERENCES STEERING COMMITTEE, REPUBLIC AND CANTON OF GENEVA SWITZERLAND, 3 April 2017 (2017-04-03), pages 769-770, XP058327452, DOI: 10.1145/3041021.3054227 ISBN: 978-1-4503-4914-7

## Description

The disclosure relates to image display apparatuses and methods of operating the same, and more particularly, to a method by which an image display apparatus provides a recommended image of an object that is recognized in an image.

An artificial intelligence (AI) system is a computer system configured to simulate human-level intelligence through self-learning and decision making, unlike an existing rule-based smart system. Through iteration, the recognition rate of an AI system improves. Accordingly, an AI system may be implemented to accurately understand a user's taste. Thus, the rule-based smart systems are being gradually replaced by deep learning-based AI systems.

AI technology includes machine learning (e.g., deep learning) and element technologies that employ machine learning.

Machine learning is an algorithmic technology that self-classifies and learns characteristics of input data. Element technologies are technologies using a machine learning algorithm such as deep learning and include technical fields such as linguistic understanding, visual understanding, inference/prediction, knowledge representation, and motion control.

Various fields to which AI technology is applied are as follows. Linguistic understanding is a technology for recognizing and applying/processing human languages/characters and includes natural language processing, machine translation, dialog systems, questioning and answering, and voice recognition/synthesis. Visual understanding is a technology for recognizing and processing objects in the manner of a human visual system and includes object recognition, object tracking, image searching, person recognition, scene understanding, spatial understanding, and image enhancement. Inference/prediction is a technology for judging information and logically inferring and predicting the same and includes knowledge/probability-based reasoning, optimization prediction, preference-based planning, and recommendation. Knowledge representation is an automation technology for incorporating human experience information into knowledge data and includes knowledge building (e.g., data generation/classification) and knowledge management (e.g., data utilization). Motion control is a technology for controlling selfdriving of autonomous vehicles and the motion of robots and includes movement control (e.g., navigation, collision avoidance, or driving) and manipulation control (e.g., behavior control).
According to an aspect of the invention, there is provided an image display apparatus as set out in claim 1. According to another aspect of the invention, there is provided a method of operating an image display apparatus as set out in claim 6.

The processor may be further configured to execute the one or more instructions to: track the object in a plurality of frames continuous from the frame; and based on a tracking result, determine the plurality of candidate frames.

The processor is further configured to recognize a plurality of objects in the frame; and receive an external input for selecting the object.

The processor is further configured to execute the one or more instructions to: receive user input for selecting the object in the frame; recognize the object; and determine the plurality of candidate frames corresponding to the object.

The processor is further configured to execute the one or more instructions to control the display to output the recommended frame.

Document US 2013/265451 A1 (SON JOO-YOUNG [KR] ET AL) 10 October 2013 discloses a display apparatus for outputting a recommended frame, document US 2016/092750 A1 (LEE JUN-TAEK [KR]) 31 March 2016 discloses a display apparatus for outputting a recommended frame, and document US 9 626 577 B1 (YU QINGFENG [US] ET AL) 18 April 2017 discloses a neural network for learning a recommendation score for frames based on brightness.

The above and other aspects, features, and advantages of certain embodiments of the disclosure will be more apparent from the following description taken in conjunction with the accompanying drawings, in which:
FIG. 1 is a view illustrating an image display apparatus determining a recommended frame corresponding to an object recognized in video content according to an embodiment;
FIG. 2 is a block diagram illustrating a configuration of an image display apparatus according to an embodiment;
FIG. 3 is a block diagram illustrating a configuration of an image display apparatus according to an embodiment;
FIG. 4 is a view illustrating selection of a frame of video content according to an embodiment;
FIGS. 5A is a flowchart illustrating a method of selecting a frame according to an embodiment;
FIG. 5B is a diagram illustrating selecting one or more objects in a selected frame according to an embodiment;
FIG. 6A is a flowchart illustrating a method of selecting an object according to an embodiment;
FIG. 6B is a diagram describing a process of selecting one or more objects in a selected frame according to an embodiment;
FIG. 7A is a flowchart illustrating a method of collecting a candidate frame according to an embodiment;
FIG. 7B is a diagram describing a process of collecting a plurality of candidate frames according to an embodiment;
FIG. 8A is a flowchart illustrating a method of collecting a candidate frame according to an embodiment;
FIG. 8B is a diagram describing a process of collecting a plurality of candidate frames according to an embodiment;
FIG. 9A is a flowchart illustrating a method of determining a recommend frame according to an embodiment;
FIG. 9B is a diagram describing a process of determining a recommended frame according to an embodiment;
FIG. 10A is a flowchart illustrating a method of determining a recommended frame according to an embodiment;
FIG. 10B is a diagram describing a process of determining a recommended frame according to an embodiment;
FIG. 11 is a view for describing a process of determining a recommended frame according to an embodiment;
FIG. 12 is a view illustrating a neural network of learning a method of determining a recommended frame from a plurality of learning frames according to an embodiment;
FIG. 13 is a flowchart of a method of operating an image display apparatus according to an embodiment;
FIG. 14 is a block diagram illustrating a configuration of a processor according to an embodiment;
FIG. 15 is a block diagram illustrating a configuration of a data learner according to an embodiment;
FIG. 16 is a block diagram illustrating a configuration of a data recognizer according to an embodiment;
FIG. 17 is a block diagram illustrating a configuration of a server according to an embodiment; and
FIG. 18 is a view illustrating an example of interoperation between the image display apparatus and the server to learn and recognize data according to an embodiment.

Hereinafter, the disclosure will be described in detail with reference to the accompanying drawings in order to enable one of ordinary skill in the art to easily embody and practice the disclosure. However, the disclosure is not limited to examples disclosed below, but may be implemented in various forms. Also, parts in the drawings unrelated to the detailed description are omitted to ensure clarity of the disclosure. Like reference numerals in the drawings denote like elements.

The terms used in the disclosure are those general terms currently widely used in the art in consideration of functions in the disclosure, but the terms may vary according to the intention of one of ordinary skill in the art, precedents, or new technology in the art. Accordingly, the terms used herein should be understood based on the unique meanings thereof and the whole context of the disclosure.

Also, the terminology used herein is for the purpose of describing embodiments only and is not intended to be limiting of embodiments. As used herein, the singular forms "a", "an", and "the", are intended to include the plural forms as well, unless the context clearly indicates otherwise. Throughout the specification, it will be understood that when an element is referred to as being "connected" to another element, it may be "directly connected" to the other element or "electrically connected" to the other element with intervening elements therebetween. It will be further understood that when a part "includes" or "comprises" an element, unless otherwise defined, the part may further include other elements, not excluding the other elements.

The use of the terms "a" and "an" and "the" and similar referents in the context of describing the disclosure (especially in the context of the following claims) is to be construed to cover both the singular and the plural. Also, the steps of all methods described herein may be performed in any suitable order unless otherwise indicated herein or otherwise clearly contradicted by context. The disclosure is not limited to the described order of the steps.

The disclosure may be described in terms of functional block components and various processing steps. Some or all of such functional blocks may be realized by any number of hardware and/or software components configured to perform the specified functions. For example, the functional blocks of the disclosure may be realized by one or more microprocessors or circuit components for performing predetermined functions. Also, the functional blocks may be implemented with various programming or scripting languages. The functional blocks may be implemented in algorithms executed on one or more processors. Also, the disclosure could employ any number of techniques according to the related art for electronics configuration, signal processing and/or control, data processing and the like. The term "mechanism", "element", "unit", or "configuration" may be used broadly and is not limited to mechanical and physical embodiments.

Furthermore, the connecting lines, or connectors shown in the various drawings are intended to represent exemplary functional relationships and/or physical or logical couplings between the various elements. It should be noted that many alternative or additional functional relationships, physical connections, or logical connections may be present in a practical device.

As used herein, the term "and/or" includes any and all combinations of one or more of the associated listed items. Expressions such as "at least one of" when preceding a list of elements, modify the entire list of elements and do not modify the individual elements of the list.

The disclosure will now be described more fully with reference to the accompanying drawings, in which embodiments are shown.

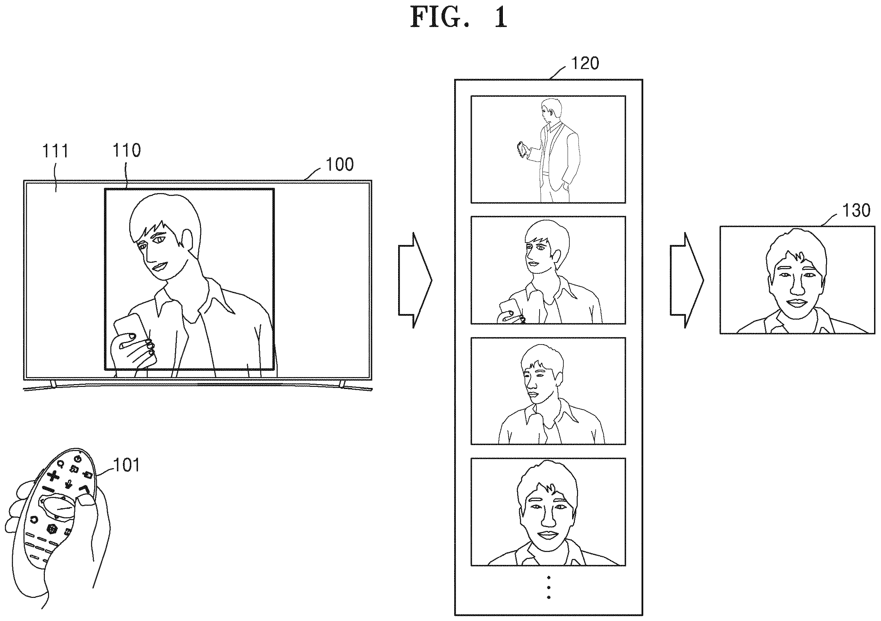

FIG. 1 is a view illustrating an image display apparatus 100 determining a recommended frame corresponding to an object recognized in video content according to an embodiment.

Referring to FIG. 1, the image display apparatus 100 may be a television (TV). However, the present embodiment is not limited thereto, and the image display apparatus 100 may be an electronic apparatus including a display. For example, the image display apparatus 100 may be any of various electronic apparatuses such as a mobile phone, a tablet personal computer (PC), a digital camera, a camcorder, a laptop computer, a desktop, an electronic-book terminal, a digital broadcast terminal, a personal digital assistant (PDA), a portable multimedia player (PMP), a navigation system, an MP3 player, or a wearable device. Also, the image display apparatus 100 may be a fixed or mobile apparatus, and may be a digital broadcast receiver capable of receiving a digital broadcast signal.

The image display apparatus 100 may be a flat display apparatus, or a curved display apparatus having a curvature, or a flexible display apparatus having an adjustable curvature. An output resolution of the image display apparatus 100 may be, for example, high definition (HD), full HD, ultra HD, or a resolution higher than ultra HD.

The image display apparatus 100 may be controlled by a control apparatus 101, and the control apparatus 101 may be any of various apparatuses for controlling the image display apparatus 100 such as a remote controller or a mobile phone. Alternatively, when a display of the image display apparatus 100 is a touchscreen, the control apparatus 101 may receive input for controlling the image display apparatus 100 on a touch screen or other user input interface via a user's finger or an input pen.

Also, the control apparatus 101 may control the image display apparatus 100 by using short-range communication such as Infrared communication or Bluetooth communication. The control apparatus 101 may control a function of the image display apparatus 100 by receiving user input using at least one of a key (including a button), a touchpad, a microphone capable of receiving the user's voice, and a sensor capable of recognizing a motion of the control apparatus 101, and transmitting to the image display apparatus 100 signals that may include information or commands corresponding to the received user input.

The control apparatus 101 may include a power on/off button for signaling the image display apparatus 100 to activate power or deactivate power thereof. Also, the control apparatus 101 may signal the image display apparatus 100 to change a channel of the image display apparatus 100, adjust a volume, select terrestrial broadcasting, cable broadcasting, or satellite broadcasting, or set a configuration in response to receiving a user input via the control apparatus 101.

Also, the control apparatus 101 may be a pointing device. For example, the control apparatus 101 may operate as a pointing device when a specific key input is received.

The term "user" used herein refers to a person who controls a function or an operation of the image display apparatus 100 by using the control apparatus 101. Examples of the user may include a viewer, a manager, and an installer.

The image display apparatus 100 according to an embodiment may determine a recommended frame for an object recognized in video content, from among a plurality of frames constituting the video content. For example, when the user is watching the video content on the image display apparatus 100, the user may pay attention to a predetermined object in the video content. Examples of objects in the video content may include, but are not limited to, a person, a garment, a bag, a vehicle, food, furniture, and a home appliance. For example, referring to FIG. 1, while the user is watching a movie, the user may be interested in an actor 110 in the movie. In this case, the user may select a frame 111 including the actor 110 from among a plurality of frames constituting the movie and may select the actor 110 in the selected frame 111. Accordingly, the image display apparatus 100 may recognize the actor no and may provide information about the actor no to the user. Alternatively, according to an embodiment, the image display apparatus 100 may automatically recognize a plurality of objects including the actor 110 in the selected frame 111, and the user may select the actor 110 from among the recognized objects.

However, according to an embodiment, the actor 110 may be unclear or may not be easily identifiable in the frame 111 selected by the user. For example, as shown in FIG. 1, when the selected frame 111 is a frame showing a profile of the actor mo, a frame showing the actor 110 in a relatively small size, or a frame whose focus is located on another actor, it may be difficult for the image display apparatus 100 to identify the actor no from the selected frame 111. Accordingly, even when the frame 111 selected by the user does not clearly show the actor 110, the image display apparatus 100 according to an embodiment may determine a recommended frame clearly showing the actor no from among a plurality of frames constituting movie content. The image display apparatus 100 may more easily identify the actor no based on the determined recommended frame and may provide information about the actor 110 to the user based on an identification result.

Referring to FIG. 1, the image display apparatus 100 according to an embodiment may collect a plurality of candidate frames 120 showing the actor 110 from the plurality of frames constituting the video content. Also, the image display apparatus 100 may determine a candidate frame to most easily identify the actor 110 as a recommended frame 130 from among the collected candidate frames 120.

The plurality of candidate frames 120 may refer to frames including an object (e.g., the actor 110 in the movie content) recognized in a selected frame, from among the plurality of frames constituting the video content. Also, the recommended frame 130 may refer to a frame most clearly showing a specific object, from among the plurality of frames constituting the video content. For example, the plurality of candidate frames 120 may include frames obtained by taking photographs of the specific object at various angles, and the recommended frame 130 may refer to, but is not limited to, a frame showing a front surface of the specific object from among the plurality of candidate frames 120.

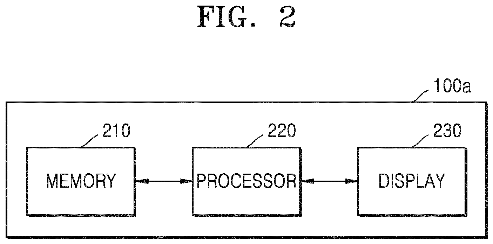

FIG. 2 is a block diagram illustrating a configuration of an image display apparatus 100a according to an embodiment.

The image display apparatus 100a of FIG. 2 may be an example of the image display apparatus 100 of FIG. 1. Referring to FIG. 2, the image display apparatus 100a according to an embodiment may include a memory 210, a processor 220, and a display 230. However, the image display apparatus 100a is not limited to the elements illustrated in FIG. 2 and may include more or fewer elements than the elements illustrated in FIG. 2.

The elements will now be sequentially described.

The memory 210 according to an embodiment may store a program for processing and controlling the processor 220 and may store data input to the image display apparatus 100a or output from the image display apparatus 100a.

The memory 210 may include at least one type of storage medium from among a flash memory type memory, a hard disk type memory, a multimedia card micro type memory, a card-type memory (e.g., a secure digital (SD) memory or an extreme digital (XD) memory), random-access memory (RAM), static random-access memory (SRAM), read-only memory (ROM), electrically erasable programmable read-only memory (EEPROM), programmable read-only memory (PROM), a magnetic memory, a magnetic disk, and an optical disk.

The memory 210 according to an embodiment may include a module including one or more instructions for controlling the display 230 to output video content, receiving an external input for selecting one frame from among a plurality of frames constituting the video content, collecting a plurality of candidate frames respectively corresponding to one or more objects recognized in the selected frame, determining a recommended frame for each of the one or more objects from the plurality of frames based on at least one of a learning model using one or more neural networks and attribute information of areas showing the one or more objects, and outputting the recommended frame for each of the one or more objects.

The processor 220 according to an embodiment controls an overall operation of the image display apparatus 100a. For example, the processor 220 may control the display 230 by executing the one or more instructions stored in and read from the memory 210 and may control the image display apparatus 100a to perform a function of the image display apparatus 100a of FIGS. 1 through 16 when the instructions are read and executed.

The processor 220 according to an embodiment controls the display 230 to output the video content. For example, the video content may include content such as, but is not limited to, a video or a movie.

The processor 220 according to an embodiment receives an external input for selecting one frame from among the plurality of frames constituting the video content. For example, the processor 220 may receive an external input for selecting one frame from the control apparatus 101 for controlling the image display apparatus 100. In this case, examples of the external input may include, but are not limited to, an input for selecting one frame by using a pause button of the control apparatus 101 and an input for selecting one frame by using a rewind button or a fast forward button of the control apparatus 101.

The processor 220 according to an embodiment collects the plurality of candidate frames respectively corresponding to the one or more objects recognized in the selected frame. The objects recognized in one frame constituting the video content may include all objects present in the video content such as a person, a garment, a bag, a vehicle, food, furniture, and a home appliance. The plurality of candidate frames 120 may refer to frames including the objects recognized in the selected frame from among the plurality of frames constituting the video content.

The processor 220 according to an embodiment analyzes the plurality of frames constituting the video content and collects the plurality of candidate frames respectively corresponding to the one or more objects based on a similarity between the plurality of frames and the one or more objects recognized in the selected frame. Alternatively, according to an embodiment, the processor 220 may track the one or more objects in a plurality of frames subsequently following the selected frame in time sequence and may collect the plurality of candidate frames respectively corresponding to the one or more objects based on a tracking result.

The processor 220 according to an embodiment determines the recommended frame for each of the one or more objects from the plurality of candidate frames, based on the learning model using the one or more neural networks and the attribute information of the areas showing the one or more objects in the plurality of candidate frames.

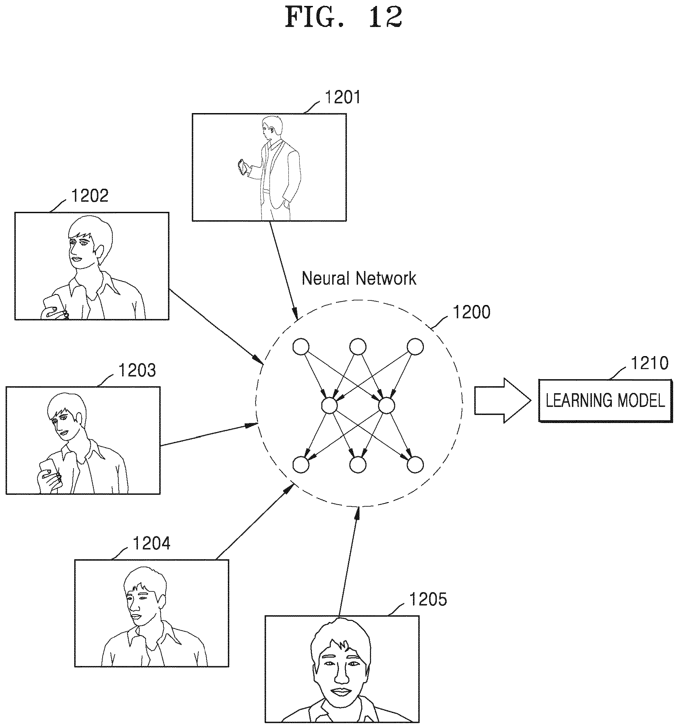

The neural network may be a set of algorithms for learning a method of determining the recommended frame from a plurality of learning frames input to a neural network based on artificial intelligence (AI). Also, the learning model may be determined by learning a method of determining the recommended image from a plurality of learning images in response to input of the plurality of learning images to the one or more neural networks. Alternatively, according to an embodiment, the learning model may be trained by learning a method of determining a recommendation score of each of the plurality of learning images in response to input of the plurality of learning images to the one or more neural networks. In this case, the plurality of learning images may include, but are not limited to, the plurality of frames constituting the video content. The neural network and the learning model will be described below in detail with reference to FIG. 12.

The processor 220 calculates a recommendation score of each of the plurality of candidate frames based on the attribute information of the areas showing the one or more objects in the plurality of candidate frames and determines the recommended frame for each of the one or more objects based on the calculated recommendation score. The attribute information may include at least one of, but is not limited to, a brightness, a size, and a focus.

The display outputs the video content. According to an embodiment, the display 230 outputs the recommended frame for each of the one or more objects recognized in a specific frame, or may output information about the recommended frame. For example, based on a result obtained by identifying an object present in the recommended frame, the display 230 may output information about the identified object.

When the display 230 is a touchscreen, the display 230 may be used as an input device in addition to an output device. For example, the display 230 may include at least one of a liquid crystal display, a thin-film transistor-liquid crystal display, an organic light-emitting diode display, a flexible display, a three-dimensional (3D) display, and an electrophoretic display. According to an implementation type of the image display apparatus 100a, the image display apparatus 100a may include two or more displays 230.

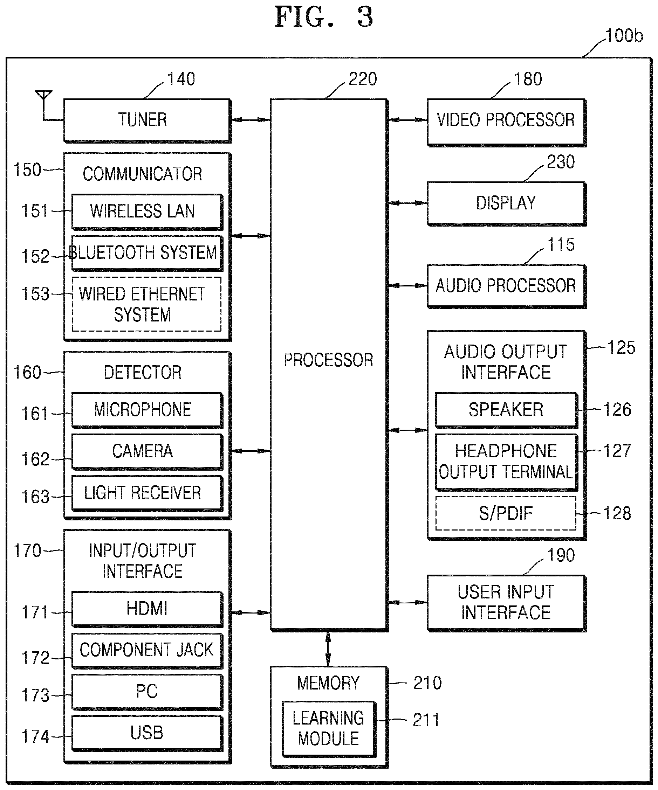

FIG. 3 is a block diagram illustrating a configuration of an image display apparatus 100b according to an embodiment.

As shown in FIG. 3, the image display apparatus 100b may further include a tuner 140, a communicator 150, a detector 160, an input/output interface 170, a video processor 180, an audio processor 115, an audio output interface 125, and a user input interface 190 in addition to the memory 210, the processor 220, and the display 230.

The memory 210, the processor 220, and the display 230 have already been described with reference to FIG. 2, and thus a repeated explanation thereof will not be given.

The tuner 140 may select a broadcast signal received in a wired or wireless manner by tuning only a frequency of a channel to be received by the image display apparatus 100b from among radio wave components through amplification, mixing, or resonance. The broadcast signal includes audio, video, and additional information (e.g., an electronic program guide (EPG)).

The broadcast signal received through the tuner 140 is decoded into audio, video, and/or additional information through audio decoding, video decoding, or additional information decoding. The video, video, and/or additional information may be stored in the memory 210 under the control of the processor 220.

One or a plurality of the tuners 140 of the image display apparatus 100b may be provided. The tuner 140 may be integrally formed with the image display apparatus 100b into an all-in-one body, or may be implemented as an additional device (e.g., a tuner connected to the input/output interface 170, or a set-top box) including a tuner electrically connected to the image display apparatus 100b.

The communicator 150 may connect the image display apparatus 100b to an external apparatus (e.g., an audio apparatus) under the control of the processor 220. The processor 220 may transmit content to and receive content from the external apparatus connected through the communicator 150, may download an application from the external apparatus, or may perform web browsing.

The communicator 150 may include one of a wireless local area network (LAN) 151, a Bluetooth system 152, and a wired Ethernet system 153 according to a performance and a structure of the image display apparatus 100b. The communicator 150 may include a combination of the wireless LAN 151, the Bluetooth system 152, and the wired Ethernet system 153. The communicator 150 may receive a control signal of the control apparatus 101 under the control of the processor 220. The control signal may be a Bluetooth signal, a radio frequency (RF) signal, or a WiFi signal.

The communicator 150 may further include a short-range communication system (e.g., a near-field communication (NFC) system or a Bluetooth low energy (BLE) system) other than the Bluetooth system 152.

The communicator 150 according to an embodiment may receive a learning model using one or more neural networks from an external server.

The detector 160 may detect a user's voice, image, or interaction, and may include a microphone 161, a camera 162, and a light receiver 163.

The microphone 161 receives the user's uttered voice. The microphone 161 may convert the received voice into an electrical signal and may output the electrical signal to the processor 220.

The camera 162 receives an image (e.g., continuous frames) corresponding to the user's motion including a gesture in a recognition range.

The light receiver 163 receives an optical signal (including a control signal) transmitted from the control apparatus 101. The light receiver 163 may receive an optical signal corresponding to a user input (e.g., a touch, a push, a touch gesture, a voice, or a motion) from the control apparatus 101. The control signal may be extracted from the received optical signal under the control of the processor 220. The light receiver 163 according to an embodiment may receive, from the control apparatus 101, an optical signal corresponding to a user input for selecting one frame from among a plurality of frames constituting video content. For example, the user input for selecting one frame may include, but is not limited to, a user input for pressing or touching a pause button. Also, the light receiver 163 according to an embodiment may receive, from the control apparatus 101, an optical signal corresponding to a user input for selecting one or more objects from the selected frame.

The input/output interface 170 receives a video (e.g., a moving image), an audio (e.g., a voice or music), and additional information (e.g., an EPG) from the outside of the image display apparatus 100b under the control of the processor 220. The input/output interface 170 may include one of a high-definition multimedia interface (HDMI) port 171, a component jack 172, a PC port 173, and a universal serial bus (USB) port 174. Alternatively, the input/output interface 170 may include a combination of the HDMI port 171, the component jack 172, the PC port 173, and the USB port 174.

The memory 210 according to an embodiment may store a program for processing and controlling the processor 220 and may store data input to the image display apparatus 100b or output from the image display apparatus 100b.

Programs stored in the memory 210 may be classified into one or more modules according to functions, and the memory 210 may include, for example, a learning module 211.

The learning module 211 may include a learning model determined by learning a method of determining a recommended image from a plurality of learning images, in response to inputting of the plurality of learning images to one or more neural networks. Also, the learning module 211 may include a learning model determined by learning a method of determining a recommendation score of each of the plurality of learning images, in response to inputting of the plurality of learning images to the one or more neural networks. The learning model may be received from an external server, and the received learning model may be stored in the learning module 211.

The processor 220 controls an overall operation of the image display apparatus 100b and signal transmission/reception between the elements of the image display apparatus 100b, and processes data. When the user's input occurs or a condition that is preset and stored is satisfied, the processor 220 may execute an operation system (OS) and various applications that are stored in the memory 210.

The processor 220 according to an embodiment may execute one or more instructions stored in the memory 210 to control the display 230 to output video content, receive an external input for selecting one frame from among a plurality of frames constituting the video content, collect a plurality of candidate frames respectively corresponding to one or more objects recognized in the selected frame, and determine a recommended frame corresponding to each of the one or more objects from the plurality of frames based on at least one of a learning model using one or more neural networks and attribute information of areas showing the one or more objects in the plurality of candidate frames.

The video processor 180 processes image data to be displayed by the display 230 and may perform various image processing operations such as decoding, scaling, noise filtering, frame rate conversion, or resolution conversion on the image data.

The display 230 may display, on a screen, a video included in a broadcast signal received through the tuner 140 under the control of the processor 220. Also, the display 230 may display content (e.g., a moving image) input through the communicator 150 or the input/output interface 170. The display 230 may output an image stored in the memory 210 under the control of the processor 220.

The audio processor 115 processes audio data. The audio processor 115 may perform various processing such as decoding, amplification, or noise filtering on the audio data.

The audio output interface 125 may output an audio included in a broadcast signal received through the tuner 140, an audio input through the communicator 150 or the input/output interface 170, or an audio stored in the memory 210 under the control of the processor 220. The audio output interface 125 may include at least one of a speaker 126, a headphone output terminal 127, and a Sony/Philips digital interface (S/PDIF) output terminal 128.

The user input interface 190 is a unit through which the user inputs data for controlling the image display apparatus 100b. Examples of the user input interface 190 may include, but are not limited to, a keypad, a dome switch, a touchpad, a jog wheel, and a jug switch.

Also, the user input interface 190 may be an element of the control apparatus 101, or an element of the image display apparatus 100b.

The block diagram of the image display apparatus 100a or 100b of FIG. 2 or 3 is a block diagram for an embodiment. Elements of the block diagram may be combined, added, or omitted according to a specification of the image display apparatus 100a or 100b that is actually implemented. For example, when necessary, two or more elements may be combined into one element, or one element may be divided into two or more elements. Also, a function performed in each block is intended to describe embodiments, and its specific operations or devices do not limit the scope of the disclosure.

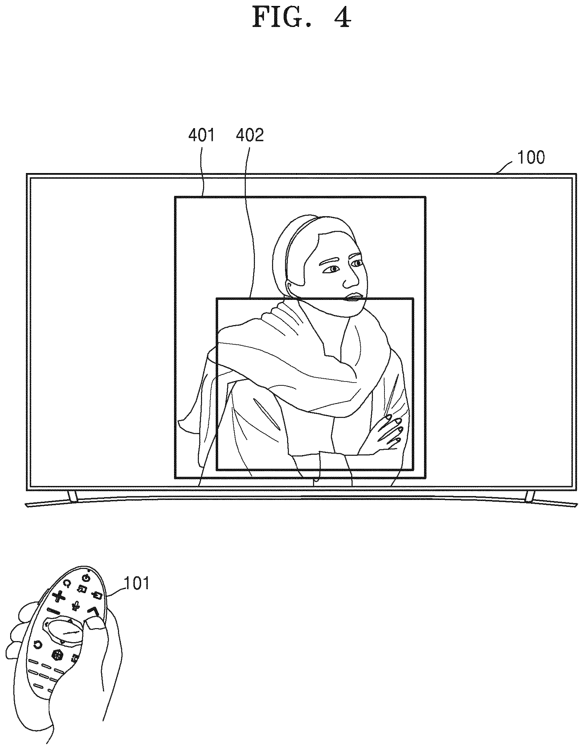

FIG. 4 is a view illustrating selection of a frame of video content according to an embodiment.

The image display apparatus 100 according to an embodiment may receive an external input for selecting one frame from among a plurality of frames constituting video content output to the display 230.

For example, referring to FIG. 4, the image display apparatus 100 may receive an input for selecting a specific frame in the video content output to the display 230 from the control apparatus 101. For example, when a user is interested in an actor 401 or a garment 402 worn by the actor 401 in the video content, the user may select a frame showing the actor 401 or the garment 402 worn by the actor 401 by using the control apparatus 101. The frame may be an image displayed on an entire screen of the image display apparatus 100 at a point in time. In this case, examples of an input for selecting the frame may include, but are not limited to, an input for pressing or touching a pause button and an input for pressing or touching a rewind button or a fast forward button.

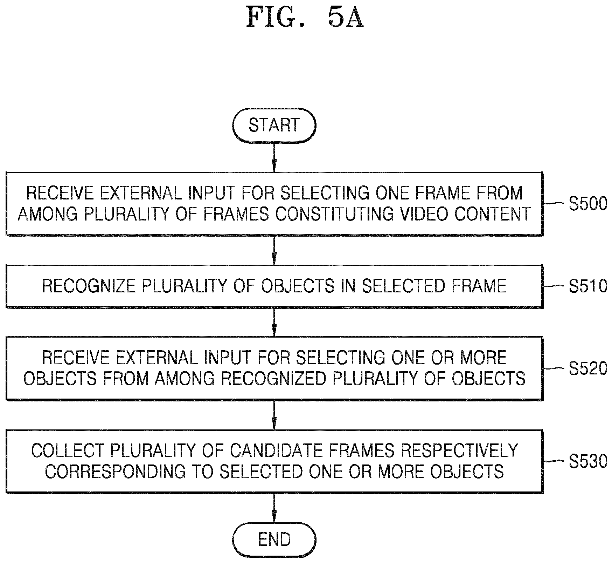

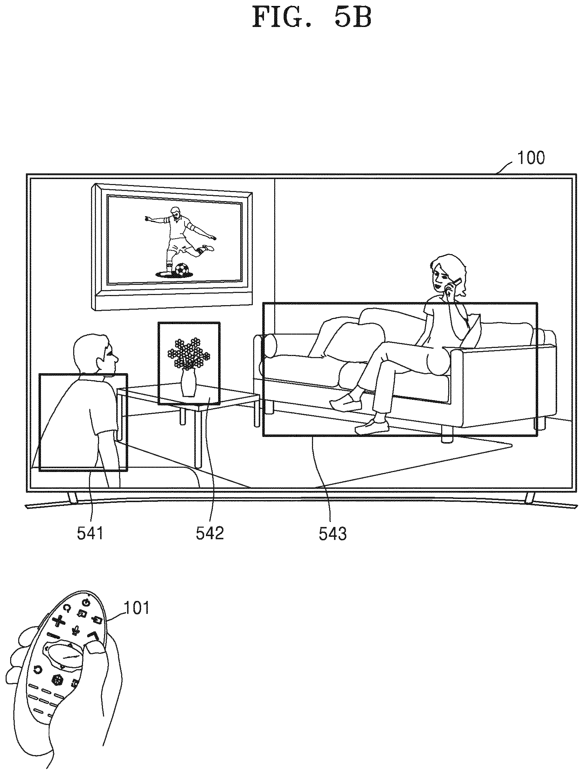

FIG. 5A is a flowchart illustrating a method of selecting a frame according to the invention and FIG. 5B is a diagram illustrating selecting one or more objects in a selected frame.

In operation S500, the image display apparatus 100 receives an external input for selecting one frame from among a plurality of frames constituting video content.

In operation S510, the image display apparatus 100 recognizes a plurality of objects in the selected frame. The image display apparatus 100 may automatically recognize the plurality of objects in the selected frame. Also, the image display apparatus 100 may distinguishably display the recognized plurality of objects. For example, the image display apparatus 100 may display the recognized plurality of objects with highlights or may display contours of the recognized plurality of objects. However, the present embodiment is not limited thereto, and the image display apparatus 100 may receive user input for specifying an object or multiple objects displayed the frame. The user input may be input to draw a shape or shapes (circle, square, etc.) bounding the object or objects, or an input tracing an outline of an object or objects. Accordingly, the image display apparatus 100 may allow a user to easily identify the recognized plurality of objects.

In operation S520, the image display apparatus 100 receives an external input for selecting one or more objects from among the recognized plurality of objects. For example, the user may select one or more objects of interest from among the plurality of objects recognized by the image display apparatus 100 by using a direction key of the control apparatus 101.

In operation S530, the image display apparatus 100 collects a plurality of candidate frames respectively corresponding to the selected one or more objects. The image display apparatus 100 may collect frames showing the selected one or more objects from among the plurality of frames constituting the video content as candidate frames. In this case, the image display apparatus 100 may collect, but is not limited to, a plurality of candidate frames from among all of the frames constituting the video content, or a plurality of candidate frames from among a plurality of frames sequential to the selected frame or preceding the selected frame.

Referring to FIG. 5B, the image display apparatus 100 may receive, from the control apparatus 101, an external input for selecting one frame from among a plurality of frames constituting a movie that a user is watching. Also, the image display apparatus 100 may automatically recognize a plurality of objects in the selected frame. For example, as shown in FIG. 5B, the recognized plurality of objects may include, but are not limited to, a garment 541 worn by a character, an illumination device 542, and a chair 543 in the movie. The image display apparatus 100 may distinguishably display the recognized plurality of objects in the selected frame. For example, as shown in FIG. 5B, the image display apparatus 100 may distinguishably display the recognized plurality of objects by using, but is not limited to, boxes displayed on the display 230. In this case, the user may focus on the garment 541 from among the recognized plurality of objects (e.g., the garment 541, the illumination device 542, and the chair 543), and may select the garment 541 recognized by the image display apparatus 100 by using the control apparatus 101.

As the garment 541 is selected from among the plurality of objects, the image display apparatus 100 may collect a plurality of candidate frames showing the selected garment 541 from among the plurality of frames constituting the movie.

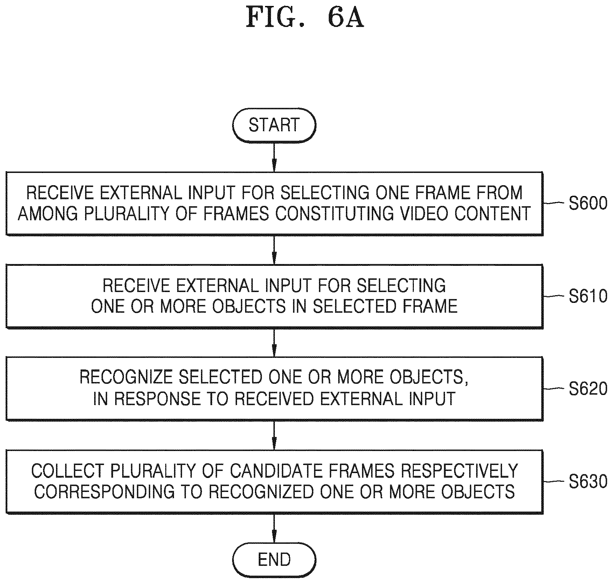

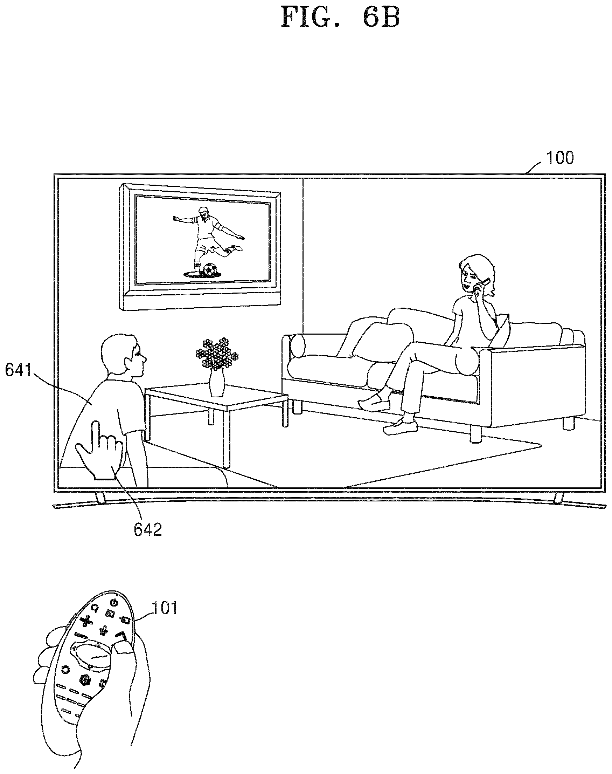

FIG. 6A is a flowchart illustrating a method of selecting an object according to an embodiment and FIG. 6B is a diagram describing a process of selecting one or more objects in a selected frame according to an embodiment.

The image display apparatus 100 according to an embodiment may automatically recognize a plurality of objects in a selected frame and may receive an input for selecting one or more objects from among the recognized plurality of objects, as shown in FIGS. 5A and 5B. Also, the image display apparatus 100 may receive an external input for selecting one or more objects in a selected frame and may recognize the selected one or more objects, as shown in FIGS. 6A and 6B.

In operation S600, the image display apparatus 100 according to an embodiment may receive an external input for selecting one frame from among a plurality of frames constituting video content.

In operation S610, the image display apparatus 100 according to an embodiment may receive an external input for selecting one or more objects in the selected frame.

For example, the image display apparatus 100 may receive an external input for selecting one or more objects in the selected frame from the control apparatus 101. For example, a user may move a cursor of the control apparatus 101 to a point at which an object of interest in the selected frame, by using a direction button or motion control for manipulating position of a pointer of the control apparatus 101. Also, according to an embodiment, the user may draw a figure corresponding to the object of interest on the display 230 by using the control apparatus 101 and may select the object based on the figure drawn by the user.

In operation S620, the image display apparatus 100 according to an embodiment may recognize the selected one or more objects, in response to the received external input. For example, when the user selects points at one or more objects located in the selected frame, the image display apparatus 100 may recognize the selected one or more objects located at the points indicated by the user. Also, according to an embodiment, when the user draws a figure corresponding to an object of interest on the display 230 by using the control apparatus 101, the image display apparatus 100 may recognize an object in the figure drawn by the user. Also, the image display apparatus 100 may recognize the object corresponding to the object recognized in the figure, in the selected frame.

In operation S630, the image display apparatus 100 may collect a plurality of candidate frames respectively corresponding to the recognized one or more objects recognized in the selected frame. For example, the image display apparatus 100 may collect frames showing the recognized one or more objects from among the plurality of frames constituting the video content as candidate frames.

Referring to FIG. 6B, the image display apparatus 100 may select one frame from among a plurality of frames constituting a movie and may receive an external input for selecting one or more objects in the selected frame from the control apparatus 101. For example, the user may move a cursor 642 of the control apparatus 101 to a point at which an object of interest 641 is located in the selected frame by using motion of the remote control apparatus 101 or a direction button of the control apparatus 101. Also, when the cursor 642 is located at the object of interest 641, the user may select the object of interest 641 at which the cursor 642 is located by using a selection button or a confirmation button of the control apparatus 101. The image display apparatus 100 may recognize the object of interest 641 selected by the user in the selected frame.

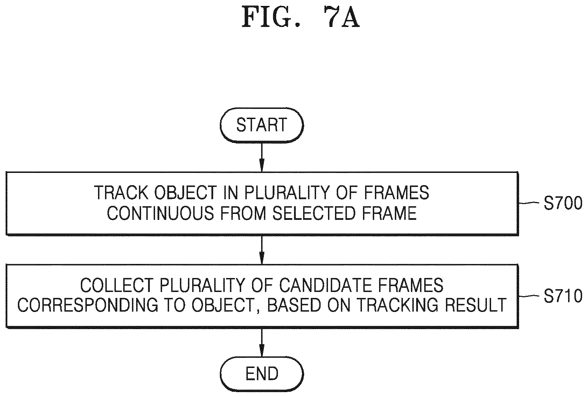

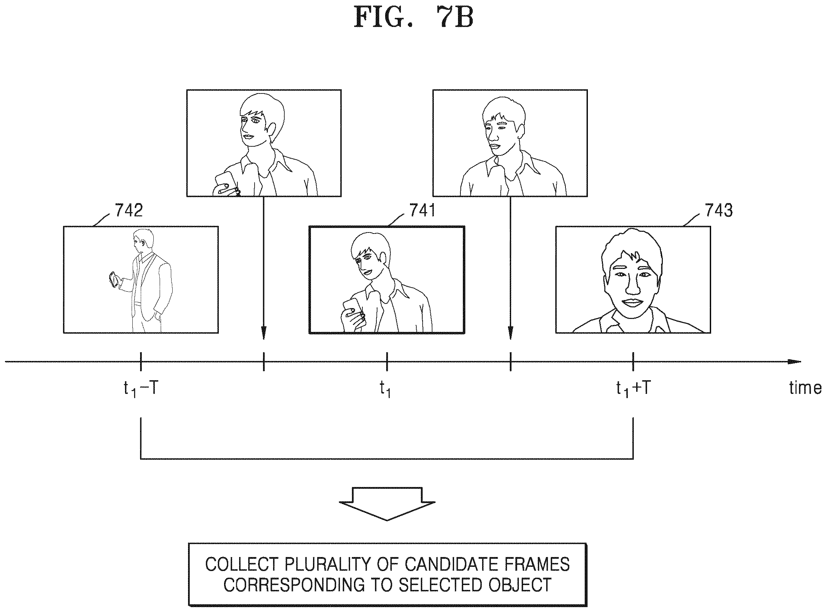

FIG. 7A is a flowchart illustrating a method of collecting a candidate frame according to an embodiment and FIG. 7B is a diagram describing a process of collecting a plurality of candidate frames according to an embodiment.

The image display apparatus 100 according to an embodiment may collect a plurality of candidate frames respectively corresponding to selected one or more objects.

In operation S700, the image display apparatus 100 may track a selected one or more objects in a plurality of frames once a frame is selected. For example, the image display apparatus 100 may detect the plurality of frames before or afterthe selected frame. Also, the image display apparatus 100 may track the one or more objects in the detected plurality of frames.

According to an embodiment, the image display apparatus 100 may detect a preset number of frames based on the selected frame. For example, the image display apparatus 100 may detect, for example, 300 frames located before and after the selected frame, based on the selected frame.

Since some of the plurality of frames constituting video content are obtained by a sequence of images, when a specific object is recognized in the selected frame, the specific object is likely to be recognized in the plurality of frames immediately before or after the selected frame. Accordingly, the image display apparatus 100 may reduce a time taken to collect candidate frames by tracking the selected one or more objects in the plurality of frames based on a position of the selected frame in the video.

In operation S710, the image display apparatus 100 may collect a plurality of candidate frames based on a tracking result.

For example, the image display apparatus 100 may track the one or more objects in the plurality of frames based on the selected frame and may collect frames including the one or more objects as a plurality of candidate frames based on a tracking result.

Referring to FIG. 7B, the image display apparatus 100 may receive an external input for selecting one of the plurality of frames constituting the video content. In this case, a selected frame 741 may be a frame corresponding to a time t₁ of a reproduction period of the video content. The image display apparatus 100 may collect a plurality of candidate frames corresponding to an object (e.g., an actor 751) recognized in the selected frame 741. The candidate frames may refer to frames including the recognized actor 751 from among the plurality of frames constituting the video content. In this case, the image display apparatus 100 may detect a plurality of frames continuous from the time t₁ corresponding to the selected frame 741. For example, as shown in FIG. 7B, the image display apparatus 100 may detect frames from a frame 742 corresponding to a time t₁-T to a frame 743 corresponding to a time t₁+T, based on the time t₁. In FIG. 7B, T may be a number of frames or a time amount, such as seconds. The image display apparatus 100 may track the actor 751 recognized in the continuous frames from the frame 742 corresponding to the time t₁-T to the frame 743 corresponding to the time t₁+T and may collect a plurality of candidate frames including the recognized actor 751 based on a tracking result.

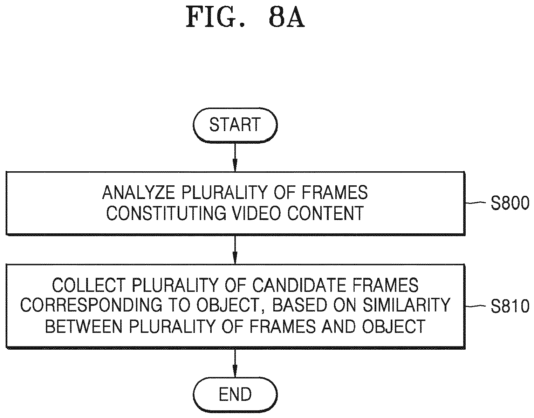

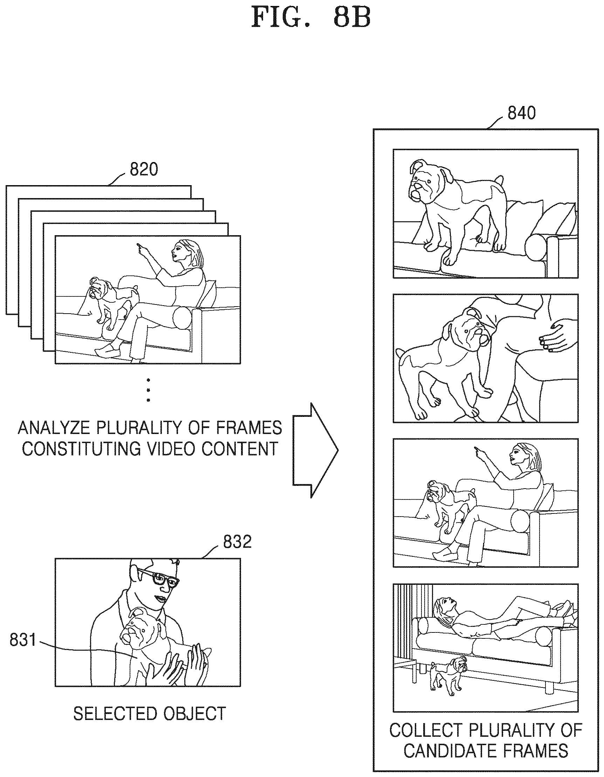

FIG. 8A is a flowchart illustrating a method of collecting a candidate frame according to an embodiment and FIG. 8B is a diagram describing a process of collecting a plurality of candidate frames according to an embodiment.

The image display apparatus 100 according to an embodiment may analyze a plurality of frames constituting video content and may collect a plurality of candidate frames corresponding to an object recognized in a selected frame based on an analysis result.

In operation S800, the image display apparatus 100 may analyze a plurality of frames constituting video content. For example, the image display apparatus 100 may analyze all of the frames constituting the video content. The image display apparatus 100 may analyze all of the frames constituting the video content and may determine a similarity between an object recognized in a selected frame and an object recognized in all of the frames.

In operation S810, the image display apparatus 100 collects a plurality of candidate frames, based on a similarity between the plurality of frames constituting the video content and the object recognized in the selected frame. The image display apparatus 100 determines that a frame including the same object as the object recognized in the selected frame has a high similarity. Accordingly, the image display apparatus 100 may collect frames including the object recognized in the selected frame as a plurality of candidate frames, from among the plurality of frames.

Referring to FIG. 8B, the image display apparatus 100 according to an embodiment may analyze a plurality of frames 820 constituting video content. The image display apparatus 100 may collect a plurality of candidate frames 840, based on a similarity between a doll 831 recognized in a frame 832 selected by a user and the plurality of frames 820. In this case, the image display apparatus 100 may determine that a frame showing the doll 831 has a higher similarity than a frame not showing the doll 831, and the collected plurality of candidate frames 840 may include frames showing the doll 831 from among the plurality of frames 820 constituting the video content.

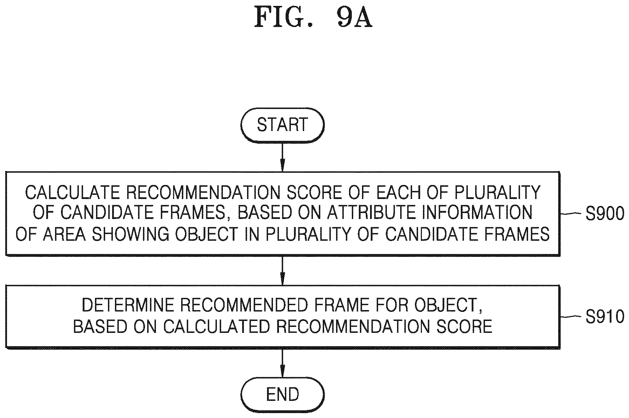

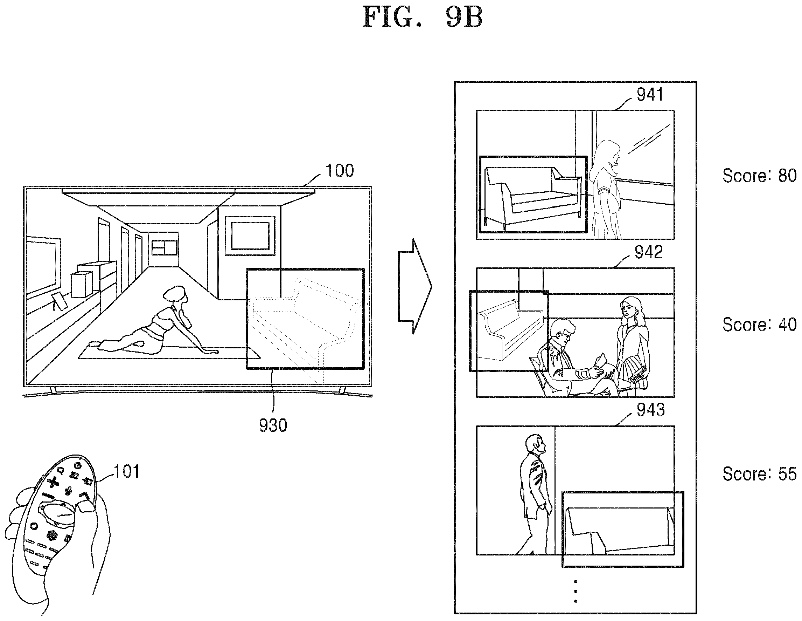

FIG. 9A is a flowchart illustrating a method of determining a recommend frame according to the invention and FIG. 9B is a diagram describing a process of determining a recommended frame.

The image display apparatus 100 determines a recommended frame from a plurality of candidate frames, based on attribute information of an area showing an object selected from a plurality of candidate frames.

In operation S900, the image display apparatus 100 calculates a recommendation score indicating how well an object of each of a plurality of candidate frames is displayed, based on attribute information of an area showing an object selected from the plurality of candidate frames.

The plurality of candidate frames are frames including the selected object and may differently show the selected object, and the attribute information may include at least one of a size, a brightness, and a focus. For example, the plurality of candidate frames may differently show a size, a brightness, and a focus of the selected object. For example, when the selected object is a bag, a first frame from among the plurality of candidate frames may show the bag so that a side surface of the bag is relatively large, and a second frame may show the bag so that a front surface of the bag is dark. Also, a third frame may locate a focus on an object other than the bag so that a shape of the bag is not clearly shown.

A frame showing a front surface of the object may more clearly identify the object than a frame showing a side surface or a rear surface of the object. Also, a frame more brightly showing the object may more clearly identify the object than a frame darkly showing the object. Also, a frame whose focus is located on the object may more clearly identify the object than a frame that does not focus on the object.

As described above, a recommended frame for the selected object refers to a frame most clearly showing the selected object from among the plurality of candidate frames. Accordingly, the image display apparatus 100 calculates a recommendation score of each of the plurality of candidate frames, based on the attribute information of the area showing the selected object in the plurality of candidate frames. For example, when the area showing the object in the candidate frame is relatively large, the area showing the object is relatively bright, or a focus is located on the area showing the object, the recommendation score is a high score indicating that the frame and the object therein may best display the selected object.

In operation S910, the image display apparatus 100 determines a recommended frame for the selected object based on the calculated recommendation score. For example, the image display apparatus 100 may determine a candidate frame having a highest recommendation score, from among the plurality of candidate frames, as the recommended frame.

Referring to FIG. 9B, the image display apparatus 100 according to an embodiment may receive an external input for selecting a chair 930 from a selected frame. Accordingly, the user may select a frame including the chair 930 from among a plurality of frames constituting the video content and may select the chair 930 from the selected frame, by using the control apparatus 101.

As the chair 930 is selected, the image display apparatus 100 may collect a plurality of candidate frames (e.g., first through third candidate frames 941, 942, and 943), from among the plurality of frames constituting the video content. As described above, the image display apparatus 100 may analyze the plurality of frames constituting the video content and may determine the first through third candidate frames 941, 942, and 943 based on a similarity between the plurality of frames and the chair 930. Also, according to an embodiment, the image display apparatus 100 may track the chair 930 in a plurality of frames continuous from the selected frame and may collect the first through third candidate frames 941, 942, and 943 based on a tracking result.

The image display apparatus 100 may calculate a recommendation score of each of the first through third candidate frames 941, 942, and 943. As described above, the image display apparatus 100 may calculate a recommendation score of each of the first through third candidate frames 941, 942, and 943, based on attribute information of areas showing the chair 930 in the first through third candidate frames 941, 942, and 943.

Referring to FIG. 9B, although all of the first through third candidate frames 941, 942, and 943 include the chair 930, attributes of the areas showing the chair 930 in the first through third candidate frames 941, 942, and 943 are different from one another. For example, in the first candidate frame 941, the area showing the chair 930 is relatively bright and a focus is located on the chair 930. Also, in the second candidate frame 942 and the third candidate frame 943, the areas showing the chair 930 are relatively dark and a focus is located on an object other than the chair 930. Accordingly, from among the first through third candidate frames 941, 942, and 943, the first candidate frame 941 most clearly showing the chair 930 may have a highest recommendation score. For example, as shown in FIG. 9B, the image display apparatus 100 may calculate, but is not limited to, a recommendation score of the first candidate frame 941 as 80, a recommendation score of the second candidate frame 942 as 40, and a recommendation score of the third candidate frame 943 as 55. Accordingly, the image display apparatus 100 may determine the first candidate frame 941 from among the first through third candidate frames 941, 942, and 943 as a recommended frame.

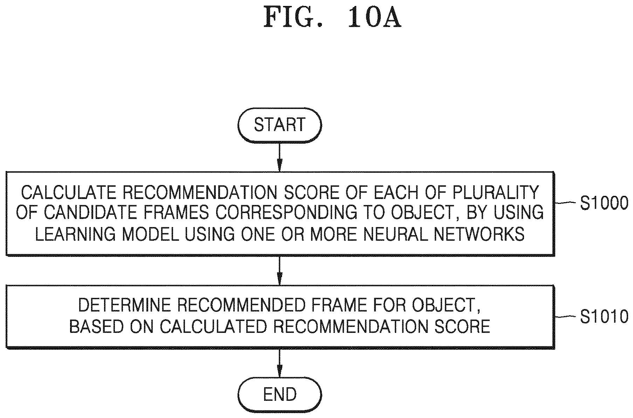

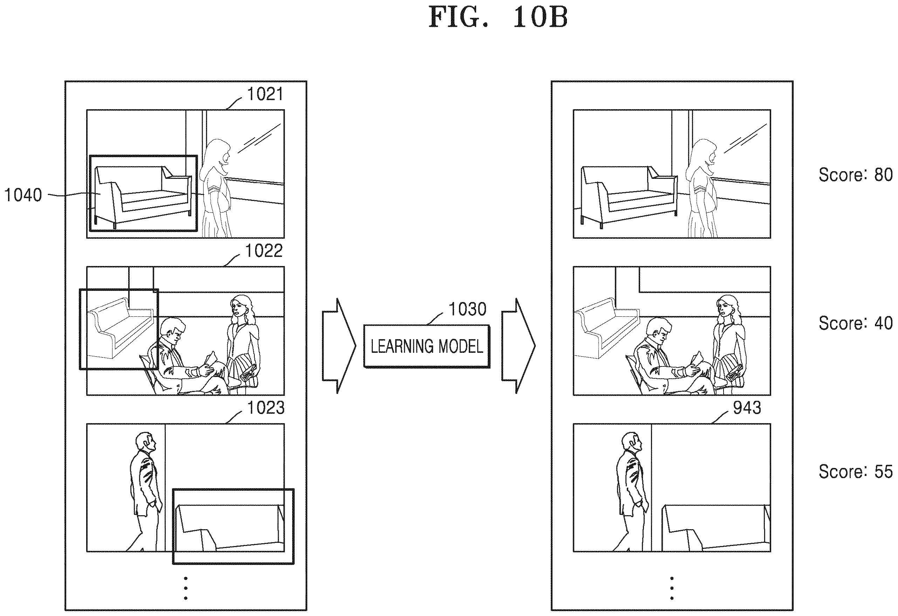

FIG. 10A is a flowchart illustrating a method of determining a recommended frame according to an embodiment and FIG. 10B is a diagram describing a process of determining a recommended frame according to another embodiment.

The image display apparatus 100 according to an embodiment may determine a recommended frame for an object selected from a plurality of frames, by using a learning model applied to one or more neural networks.

In operation S1000, the image display apparatus 100 may calculate a recommendation score of each of a plurality of candidate frames corresponding to the selected object, by using a learning model applied to one or more neural networks.

The neural network may be a set of algorithms for learning a method of calculating a recommendation score of each of a plurality of images input to a neural network based on AI. For example, in the plurality of images that are images including a predetermined object, attributes of areas showing the predetermined object may be different from one another. For example, the neural network may learn a method of calculating the recommendation score of each of the plurality of images, based on supervised learning using a predetermined recommended image as an input value or unsupervised learning for finding a pattern for calculating the recommendation score of each of the plurality of images by self-learning a type of data needed to calculate the recommendation score of each of the plurality of images without supervision. Also, the neural network may learn a method of calculating the recommendation score of each of the plurality of images, by using reinforcement learning using a feedback about whether a result obtained by calculating the recommendation score according to learning is correct.

In operation S1010, the image display apparatus 100 may determine a recommended frame for an object selected from the plurality of candidate frames, based on the calculated recommendation score. For example, the image display apparatus 100 may determine a candidate frame having a highest recommendation score from among the plurality of candidate frames as the recommended frame for the selected object.

For example, referring to FIG. 10B, the image display apparatus 100 according to an embodiment may calculate a recommendation score of each of a plurality of candidate frames (e.g., first through third candidate frames 1021, 1022, and 1023) by using a learning model 1030. The first through third candidate frames 1021, 1022, and 1023 may be frames including a chair 1040 in video content, and the image display apparatus 100 may determine a recommended frame for the chair 1040 from among the first through third candidate frames 1021, 1022, and 1023. The learning model 1030 may be determined by training a method of determining a recommendation score of each of a plurality of images, in response to inputting of the plurality of images including a predetermined object. In this case, the plurality of images may include, but are not limited to, a plurality of candidate frames collected from among a plurality of frames constituting the video content.

As the first through third candidate frames 1021, 1022, and 1023 are input to the learning model 1030, a recommendation score of each of the first through third candidate frames 1021, 1022, and 1023 may be calculated. For example, as shown in FIG. 10B, a recommendation score of the first candidate frame 1021 may be 80, a recommendation score of the second candidate frame 1022 may be 40, and a recommendation score of the third candidate frame 1023 may be 55. In this case, the image display apparatus 100 may determine the first candidate frame 1021 having a highest recommendation score from among the first through third candidate frames 1021, 1022, and 1023 as a recommended frame in which the chair 1040 is best displayed.

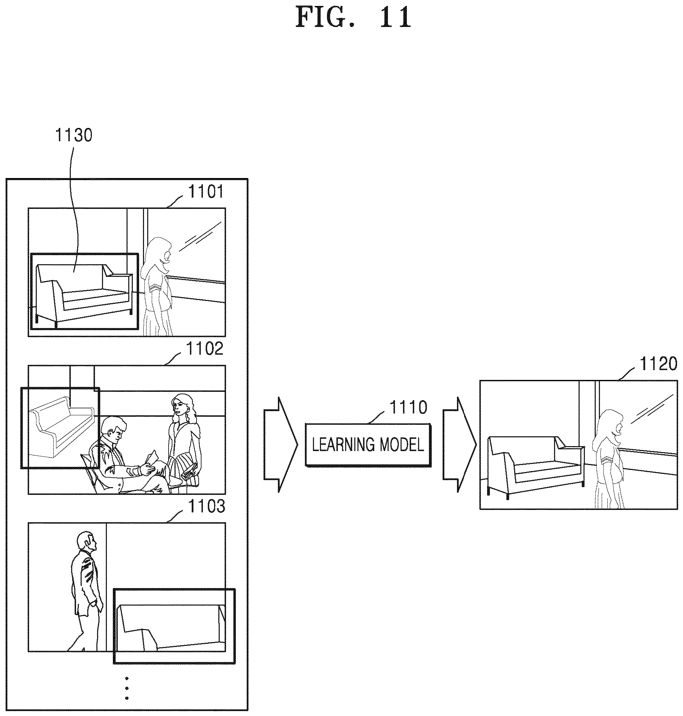

FIG. 11 is a view for describing a process of determining a recommended frame according to an embodiment.

The image display apparatus 100 according to an embodiment may determine a recommended frame for an object selected from a plurality of frames, by using a learning model applied to one or more neural networks. In this case, unlike in FIGS. 10A and 10B, the neural network may be a set of algorithms for training on a method of determining the recommended frame from a plurality of images input to a neural network based on AI. For example, the neural network may learn a method of determining a recommended image from the plurality of images, based on supervised learning using a predetermined recommended image as an input value or unsupervised learning for finding a pattern for determining the recommended image from the plurality of images by self-learning a type of data needed to determine the recommended frame from the plurality of images without supervision. Also, the neural network may learn a method of determining the recommended image from the plurality of images, by using reinforcement learning using a feedback about whether a result obtained by determining the recommended frame according to learning is correct.

For example, referring to FIG. 11, the image display apparatus 100 according to an embodiment may determine a recommended frame 1120 from a plurality of candidate frames 1101, 1102, and 1103 by using a learning model 1110. The plurality of candidate frames 1101, 1102, and 1103 may refer to frames including a chair 1130 in video content which a user is watching. In the plurality of candidate frames 1101, 1102, and 1103, attributes of areas showing the chair 1130 may be different from one another, and the image display apparatus 100 may determine the recommended frame 1120 from the plurality of candidate frames 1101, 1102, and 1103, by using the learning model 1110 using one or more neural networks.

FIG. 12 is a view illustrating a neural network of learning a method of determining a recommended frame from a plurality of learning frames according to an embodiment.

Referring to FIG. 12, one or more neural networks 1200 may learn a method of determining a recommended image from a plurality of learning images 1201 through 1205 using the plurality of learning images 1201 through 1205 as input values. For example, the one or more neural networks 1200 may train a method of determining the recommended image for a male actor from the plurality of learning images 1201 through 1205 showing the male actor in video content. In this case, the plurality of learning images 1201 through 1205 may include, but are not limited to, some of the plurality of frames constituting the video content which a user is watching.

The one or more neural networks 1200 may learn a method of determining the recommended image from the plurality of learning images 1201 through 1205 in response to inputting of the plurality of learning images 1201 through 1205, and a learning model 1210 may be generated based on a learning result.

According to an embodiment, an operation of learning a method of determining a recommended image from a plurality of images by using the one or more neural networks 1200 may be previously performed. Also, as some of the plurality of learning images are changed, the learning model 1210 may be refined. For example, as the user is watching the video content on the image display apparatus 100, a plurality of frames extracted from the video content may be used as learning images. Product images used in electronic commerce (e-commerce) may also be used as learning images. When a new learning image is added, the one or more neural networks 1200 may train again and update a method of determining the recommended image from the plurality of images, and thus the learning model 1210 may be refined.

Also, an operation of learning a method of determining the recommended image from the plurality of learning images 1201 through 1205 by using the one or more neural networks 1200 may be performed by the image display apparatus 100, or may be performed by an external server according to an embodiment. For example, an operation of learning a method of determining the recommended image from the plurality of learning images 1201 through 1205 by using the one or more neural networks 1200 may require a relatively complex and large amount of calculation. Accordingly, the amount of calculations to be performed by the image display apparatus 100 may be reduced when the external server performs a learning operation and the image display apparatus 100 receives the learning model 1210 from the external server. The image display apparatus 100 may previously receive the learning model 1210 from the external server, may store the learning model 1210 in a memory, and may determine the recommended image from the plurality of images by using the stored learning model 1210.

Also, according to an embodiment, the one or more neural networks 1200 may train a method of calculating a recommendation score of each of the plurality of learning images 1201 through 12054 using the plurality of learning images 1201 through 1205 as input values. For example, the one or more neural networks 1200 may learn a method of calculating the recommendation score of each of the plurality of learning images 1201 through 1205 showing the male actor in the video content.

The one or more neural networks 1200 may learn a method of calculating the recommendation score of each of the plurality of learning images 1201 through 1205, in response to inputting of the plurality of learning images 1201 through 1205, and the learning model 1210 may be generated based on a learning or training result.

According to an embodiment, an operation of learning a method of calculating the recommendation score of each of the plurality of learning (or training) images 1201 through 1205 by using the one or more neural networks 1200 may be previously performed. Also, as some of the plurality of learning images 1201 through 1205 are changed, the learning model 1210 may be refined.

Also, an operation of learning a method of calculating the recommendation score of each of the plurality of learning images 1201 through 1205 by using the one or more neural networks 1200 may be performed by the image display apparatus 100, or may be performed by the external server according to an embodiment. The image display apparatus 100 may previously receive the learning model 1210 from the external server, may store the learning model 1210 in the memory, and may determine the recommended image from the plurality of images by using the stored learning model 1210.

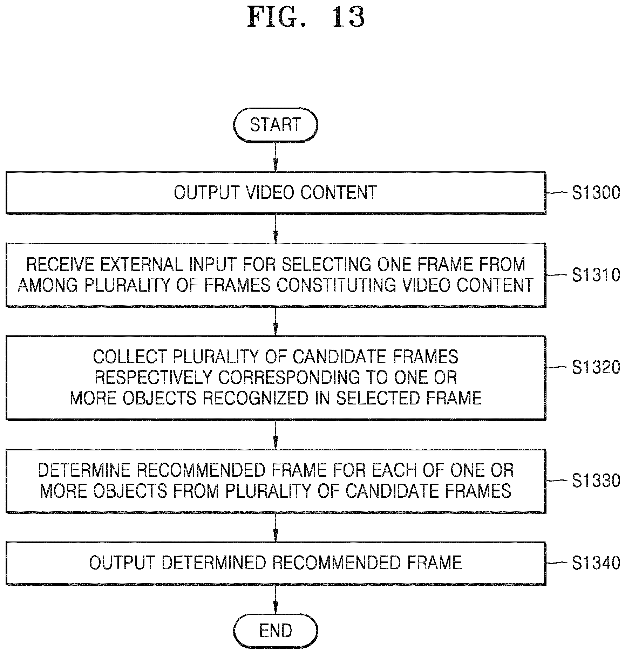

FIG. 13 is a flowchart of a method of operating an image display apparatus 100 according to an embodiment.

In operation S1300, the image display apparatus 100 outputs video content. For example, the video content may include, but is not limited to, content such as a video or a movie.

In operation S1310, the image display apparatus 100 receives an external input for selecting one frame from among a plurality of frames constituting the video content. For example, the image display apparatus 100 may receive an external input for selecting one frame from the control apparatus 101.

In operation S1320, the image display apparatus 100 collects a plurality of candidate frames respectively corresponding to one or more objects recognized in the selected frame. For example, the image display apparatus 100 may analyze the plurality of frames constituting the video content and may collect the plurality of candidate frames respectively corresponding to the one or more objects, based on a similarity between the plurality of frames and similarity between the one or more objects recognized in the selected frame. According to an embodiment, the image display apparatus 100 may track the one or more objects in a plurality of frames continuous from the selected frame and may collect the plurality of candidate frames respectively corresponding to the one or more objects based on a tracking result.

In operation S1330, the image display apparatus 100 determines a recommended frame for each of the one or more objects from the plurality of candidate frames, based on at least one of a learning model using one or more neural networks and attribute information of areas showing the one or more objects in the plurality of candidate frames.

The learning model may be determined by learning a method of determining a recommended image from a plurality of learning images, in response to inputting of the plurality of learning images to the one or more neural networks. Alternatively, according to an embodiment, the learning model may be determined by learning a method of determining a recommendation score of each of the plurality of learning images, in response to inputting of the plurality of learning images to the one or more neural networks.

The recommendation score of each of the plurality of candidate frames may be calculated, based on the attribute information of the areas showing the one or more objects in the plurality of candidate frames, and the recommended frame for each of the one or more objects may be determined based on the calculated recommendation score. For example, the attribute information may include, but is not limited to, at least one of a brightness, a size, and a focus.

In operation S1340, the image display apparatus 100 outputs the determined recommended frame. For example, the image display apparatus 100 may output the determined recommended frame on the display 230 of the image display apparatus 100. Also, the image display apparatus 100 may output information about an object present in the recommended frame along with the recommended frame on the display 230. Also, the image display apparatus 100 may output the determined recommended frame to an external apparatus, and the external apparatus may perform a predetermined operation based on the recommended frame received from the image display apparatus 100.

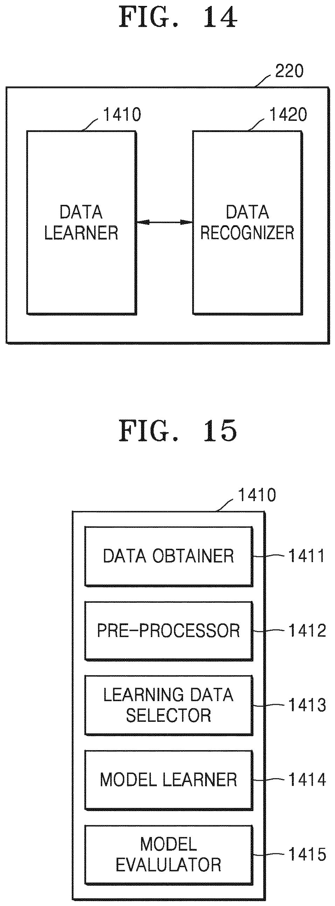

FIG. 14 is a block diagram illustrating a configuration of the processor 220 according to an embodiment.

Referring to FIG. 14, the processor 220 according to an embodiment may include a data learner 1410 and a data recognizer 1420.

The data learner 1410 may train or learn a model for determining a recommended image from a plurality of images. The data learner 1410 may learn a model by which information of the plurality of images is used to determine the recommended image from the plurality of images. Also, the data learner 1410 may learn how to determine the recommended image by using information of the plurality of images. The data learner 1410 may learn or train a model for determining the recommended image from the plurality of images, by obtaining data to be used for learning and applying the obtained data to a data recognition model.

The data recognizer 1420 may determine the recommended image from the plurality of images and may output the determined recommended image. The data recognizer 1420 may determine the recommended image from the plurality of images, by using the learned data recognition model. The data recognizer 1420 may obtain the plurality of images according to a preset standard by learning and may use the data recognition model using the obtained plurality of images as input values. Also, the data recognizer 1420 may determine the recommended image from the plurality of images, by using the data recognition model. Also, a resultant value output by the data recognition model using the obtained plurality of images as input values may be used to refine the data recognition model.

At least one of the data learner 1410 and the data recognizer 1420 may be manufactured as at least one hardware chip and may be mounted on an electronic apparatus. For example, at least one of the data learner 1410 and the data recognizer 1420 may be manufactured as a dedicated hardware chip for AI or may be manufactured as a part of an existing general-purpose processor (e.g., a central processing unit (CPU) or an application processor) or a graphics processor (e.g., a graphics processing unit (GPU)) that executes instructions one or more computer programs stored in a memory of the electronic apparatus, and may be mounted on any of various electronic apparatuses.

In this case, the data learner 1410 and the data recognizer 1420 may be mounted on one electronic apparatus, or may be separately mounted on electronic apparatuses. For example, one of the data learner 1410 and the data recognizer 1420 may be included in the image display apparatus 100, and the other one may be included in a server. Also, model information established by the data learner 1410 may be provided to the data recognizer 1420, and data input to the data recognizer 1420 may be provided as additional learning data to the data learner 1410 by wire or wirelessly.

At least one of the data learner 1410 and the data recognizer 1420 may be implemented as a software module. When at least one of the data learner 1410 and the data recognizer 1420 is implemented as a software module (or a program module including instructions), the software module may be stored in a non-transitory computer-readable recording medium. Also, in this case, at least one software module may be provided by an OS or a predetermined application. Alternatively, a part of at least one software module may be provided by an OS, and the remaining part may be provided by a predetermined application.

FIG. 15 is a block diagram illustrating a configuration of the data learner 1410 according to an embodiment.

Referring to FIG. 15, the data learner 1410 according to an embodiment may include a data obtainer 1411, a pre-processor 1412, a learning data selector 1413, a model learner 1414, and a model evaluator 1415.

The data obtainer 1411 may obtain data needed for learning for determining a recommended image from a plurality of images. The data obtainer 1411 may obtain data from an external server such as a social network server, a cloud server, or a content providing server.

The data obtainer 1411 may obtain a plurality of images needed for learning for determining the recommended image from the plurality of images. For example, the data obtainer 1411 may obtain the plurality of images from at least one external apparatus connected to the image display apparatus 100 through a network and may obtain the plurality of images by extracting a plurality of frames from video content which a user is watching.

The pre-processor 1412 may pre-process the obtained data so that the data is used for learning for determining the recommended image from the plurality of images. The pre-processor 1412 may process the obtained data into a preset format so that the model learner 1414 may use the obtained data for learning for determining the recommended image from the plurality of images. For example, the pre-processor 1412 may analyze the obtained plurality of images and may detect, but is not limited to, attribute information of the plurality of images.

The learning data selector 1413 may select data needed for learning from among pieces of pre-processed data. The selected data may be provided to the model learner 1414. The learning data selector 1413 may select the data needed for learning from among the pieces of pre-processed data, according to a preset standard for determining the recommended image from the plurality of images. Also, the learning data selector 1413 may select the data according to a standard preset by learning by the model learner 1414 that will be described below.

The model learner 1414 may train a model about which learning data is to be used to determine the recommended image from the plurality of images. For example, the model learner 1414 may learn types, the number, or levels of image attributes used to determine the recommended image from the plurality of images.

Also, the model learner 1414 may train a data recognition model used to determine the recommended image from the plurality of images by using the learning data. In this case, the data recognition model may be a model that is previously established. For example, the data recognition model may be a model that is previously established by receiving basic learning data (e.g., a sample image).

The data recognition model may be established considering a field to which a recognition model is applied, the purpose of learning, or the computer performance of the apparatus. The data recognition model may be a model based on, for example, a neural network. For example, a model such as a deep neural network (DNN), a recurrent neural network (RNN), or a bidirectional recurrent deep neural network (BRDNN) may be used as the data recognition model. However, the present embodiment is not limited thereto.

According to various embodiments, when there are a plurality of data recognition models that are previously established, the model learner 1414 may determine a data recognition model having a high relationship between input learning data and basic learning data as a data recognition model to be trained. In this case, the basic learning data may be previously classified according to types of data, and the data recognition models may be previously established according to the types of data. For example, the basic learning data may be previously classified according to various standards such as an area where learning data is generated, a time at which the learning data is generated, a size of the learning data, a genre of the learning data, a generator of the learning data, and a type of an object in the learning data.

Also, the model learner 1414 may train the data recognition model by using a learning algorithm including, for example, error back-propagation or gradient descent.

Also, the model learner 1414 may train the data recognition model through, for example, supervised learning using learning data as an input value. Also, the model learner 1414 may train the data recognition model through, for example, unsupervised learning for finding a standard for determining a user's state, by selflearning a type of data needed to determine the user's state without supervision. Also, the model learner 1414 may train the data recognition model through, for example, reinforcement learning using a feedback about whether a result obtained by determining the user's state according to learning is correct.

Also, when the data recognition model is trained, the model learner 1414 may store the trained data recognition model. In this case, the model learner 1414 may store the trained data recognition model in a memory of an apparatus including the data recognizer 1420. Alternatively, the model learner 1414 may store the trained data recognition model in a memory of a server connected to the image display apparatus 100 through a wired or wireless network.

In this case, the memory storing the trained data recognition model may also store, for example, a program instructions or data related to at least another element of the image display apparatus 100. Also, the memory may store software and/or a program. The program may include, for example, a kernel, middleware, an application programming interface (API), and/or an application program (or an application).

When the model evaluator 1415 inputs evaluation data to the data recognition model and a recognition result output from the evaluation data does not satisfy a predetermined standard, the model evaluator 1415 may cause the model learner 1414 to update or learn again. In this case, the evaluation data may be preset data for evaluating the data recognition model.

For example, from among recognition results of the trained data recognition model output from evaluation data, when the number or a ratio of recognition results that are not accurate exceeds a preset threshold value, the model evaluator 1415 may evaluate that the predetermined standard is not satisfied. For example, when 2% is defined as the predetermined standard and wrong recognition results are output from more than 20 pieces of evaluation data from among 1000 pieces of evaluation data, the model evaluator 1415 may evaluate that the trained data recognition model is not suitable.

When there are a plurality of trained data recognition models, the model evaluator 1415 may evaluate whether each of the trained recognition models satisfies a predetermined standard and may determine a model satisfying the predetermined standard as a final data recognition model. In this case, when a plurality of models satisfy the predetermined standard, the model evaluator 1415 may determine one or a predetermined number of models that are preset in a descending order of evaluation scores as final data recognition models.

At least one of the data obtainer 1411, the pre-processor 1412, the learning data selector 1413, the model learner 1414, and the model evaluator 1415 in the data learner 1410 may be manufactured as at least one hardware chip and may be mounted on an electronic apparatus. For example, at least one of the data obtainer 1411, the pre-processor 1412, the learning data selector 1413, the model learner 1414, and the model evaluator 1415 may be manufactured as a dedicated hardware chip for AI or may be manufactured as a part of an existing general-purpose processor (e.g., a CPU or an application processor) or a graphics processor (e.g., a GPU), and may be mounted on any of various electronic apparatuses.

Also, the data learner 1410, the pre-processor 1412, the learning data selector 1413, the model learner 1414, and the model evaluator 1415 may be mounted on one electronic apparatus, or may be separately respectively mounted on electronic apparatuses. For example, some of the data obtainer 1411, the pre-processor 1412, the learning data selector 1413, the model learner 1414, and the model evaluator 1415 may be included in the image display apparatus 100, and the remaining ones may be included in the server.

Also, at least one of the data obtainer 1411, the pre-processor 1412, the learning data selector 1413, the model learner 1414, and the model evaluator 1415 may be implemented as a software module. When at least one of the data obtainer 1411, the pre-processor 1412, the learning data selector 1413, the model learner 1414, and the model evaluator 1415 is implemented as a software module (or a program module including instructions), the software module may be stored in a non-transitory computer-readable recording medium. Also, in this case, at least one software module may be provided by an OS or a predetermined application. Alternatively, a part of at least one software module may be provided by an OS, and the remaining part may be provided by a predetermined application.

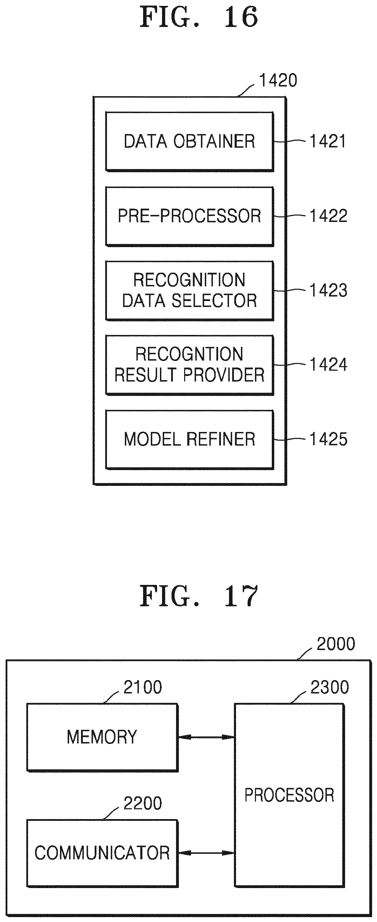

FIG. 16 is a block diagram illustrating a configuration of the data recognizer 1420 according to an embodiment.

Referring to FIG. 16, the data recognizer 1420 according to an embodiment may include a data obtainer 1421, a pre-processor 1422, a recognition data selector 1423, a recognition result provider 1424, and a model refiner 1425.

The data obtainer 1421 may obtain data needed to determine a recommended image from a plurality of images, and the pre-processor 1422 may pre-process the obtained data so that the data obtained to determine the recommended image from the plurality of images is used. The pre-processor 1422 may process the obtained data into a preset format so that the recognition result provider 1424 that will be described below may use the data obtained to determine the recommended image from the plurality of images.

The recognition data selector 1423 may select data needed to determine the recommended image from the plurality of images from among pieces of prepreprocessed data. The selected data may be provided to the recognition result provider 1424. The recognition data selector 1423 may select some or all of the pieces of pre-processed data, according to a preset standard or rule for determining the recommended image from the plurality of images.

The recognition result provider 1424 may determine the recommended image from the plurality of images by applying the selected data to a data recognition model. The recognition result provider 1424 may provide a recognition result according to a data recognition purpose. The recognition result provider 1424 may apply the selected data to the data recognition model, by using the data selected by the recognition data selector 1423 as an input value. Also, the recognition result may be determined by the data recognition model.

The recognition result provider 1424 may provide identification information indicating the recommended image determined from the plurality of images. For example, the recognition result provider 1424 may provide information about an object indicated by the recommended image. For example, when the object indicated by the recommended image is a product, information about a name and a price of the product, a website or URL where the product may be purchased, etc. may be provided, and when the object indicated by the recommended image is a person, information about a name, etc. of the person may be provided.

The model refiner 1425 may refine the data recognition model, based on evaluation of the recognition result provided by the recognition result provider 1424. For example, the model refiner 1425 may provide the recognition result provided by the recognition result provider 1424 to the model learner 1414 so that the model learner 1414 refines the data recognition model.

At least one of the data obtainer 1421, the pre-processor 1422, the recognition data selector 1423, the recognition result provider 1424, and the model refiner 1425 in the data recognizer 1420 may be manufactured as at least one hardware chip and may be mounted on an electronic apparatus. For example, at least one of the data obtainer 1421, the pre-processor 1422, the recognition data selector 1423, the recognition result provider 1424, and the model refiner 1425 may be manufactured as a dedicated hardware chip for AI or may be manufactured as a part of an existing general-purpose processor (e.g., a CPU or an application processor) or a graphics processor (e.g., a GPU), and may be mounted on any of various electronic apparatuses.

Also, the data obtainer 1421, the pre-processor 1422, the recognition data selector 1423, the recognition result provider 1424, and the model refiner 1425 may be mounted on one electronic apparatus, or may be separately respectively mounted on electronic apparatuses. For example, some of the data obtainer 1421, the pre-processor 1422, the recognition data selector 1423, the recognition result provider 1424, and the model refiner 1425 may be included in the image display apparatus 100, and the others may be included in the server.

Also, at least one of the data obtainer 1421, the pre-processor 1422, the recognition data selector 1423, the recognition result provider 1424, and the model refiner 1425 may be implemented as a software module. When at least one of the data obtainer 1421, the pre-processor 1422, the recognition data selector 1423, the recognition result provider 1424, and the model refiner 1425 is implemented as a software module (or a program module including instructions), computer-readable codes or instructions of the software module may be stored in a non-transitory computer-readable recording medium. Also, in this case, at least one software module may be provided by an OS or a predetermined application. Alternatively, a part of at least one software module may be provided by an OS and the remaining part may be provided by a predetermined application.

FIG. 17 is a block diagram illustrating a configuration of a server 2000 according to an embodiment.

Referring to FIG. 17, the server 2000 according to an embodiment may include a memory 2100, a communicator 2200, and a processor 2300.

The memory 2100 may store various data, programs, or applications for driving and controlling the server 2000. The programs stored in the memory 2100 may include one or more instructions. The programs (the one or more instructions) or the applications stored in the memory 2100 may be executed by the processor 2300.

The memory 2100 according to an embodiment may include a neural network module in which a learning result using one or more neural networks is stored.

The communicator 2200 may include one or more elements for communication with the image display apparatus 100.

The processor 2300 generally controls an overall operation of the server 200. For example, the processor 2300 may control operations of the memory 2100 and the communicator 2200 by executing the programs stored in the memory 2100. The processor 2300 may perform some operations of the image display apparatus 100 of FIGS. 1 through 16 by executing the programs stored in the memory 2100.

The processor 2300 may perform a function of determining a recommended image from a plurality of images, which is a function performed by the image display apparatus 100 of FIGS. 1 through 16.

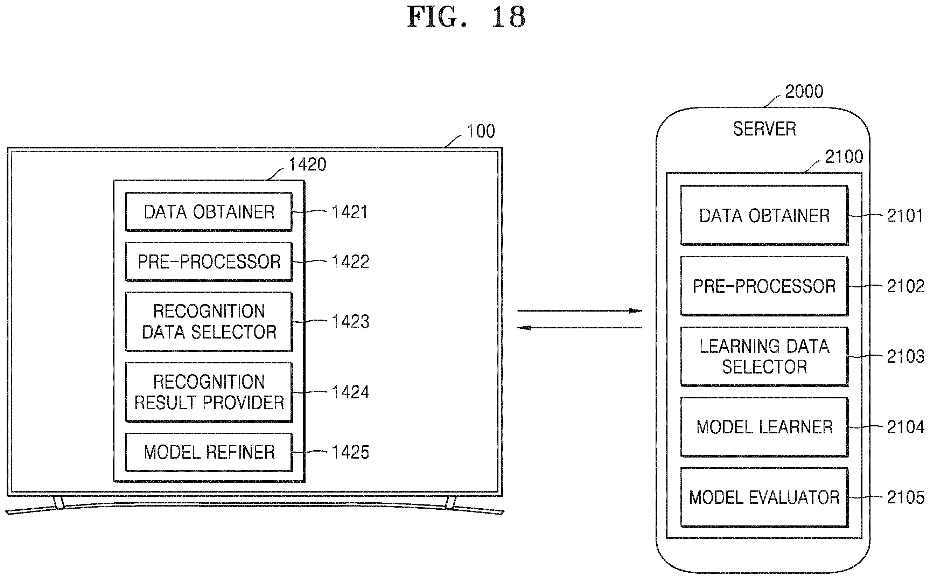

FIG. 18 is a diagram illustrating an example of interoperation between the image display apparatus 100 and the server 2000 to learn and recognize data according to an embodiment.

Referring to FIG. 18, the server 2000 may train or learn a model for determining a recommended image from a plurality of images. The server 200 may learn a model for determining and recognizing the recommended image from the plurality of images by obtaining data to be used for learning and applying the obtained data to a data recognition model.

In this case, a model learner 2104 of the server 2000 may perform a function of the data learner 1410 of FIG. 15. The model learner 2104 of the server 2000 may learn a model to be used to determine the recommended image from the plurality of images. Also, the model learner 2104 of the server 2000 may learn a standard about how to determine the recommended image from the plurality of images by using data. The model learner 2104 may learn a standard for determining the recommended image from the plurality of images by obtaining data to be used for learning and applying the obtained data to the data recognition model.

Also, the recognition result provider 1424 of the image display apparatus 100 may determine the recommended image from the plurality of images by applying data selected by the recognition data selector 1423 to the data recognition model generated by the server 2000. For example, the recognition result provider 1424 may transmit the data selected by the recognition data selector 1423 to the server 2000, and the server 2000 may request to determine the recommended image from the plurality of images by applying the data selected by the recognition data selector 1423 to a recognition model.

Alternatively, the recognition result provider 1424 of the image display apparatus 100 may receive the recognition model generated by the server 2000 from the server 2000 and may determine the recommended image from the plurality of images by using the received recognition model. In this case, the recognition result provider 1424 of the image display apparatus 100 may determine the recommended image from the plurality of images by applying the data selected by the recognition data selector 1423 to the data recognition model received from the server 2000.

Also, the image display apparatus 100 and the server 2000 may effectively execute learning and data recognition of a data recognition model through division of roles. Accordingly, data processing may be efficiently performed to provide a service that meets a user's intention and the user's privacy may be effectively protected.

Some embodiments may be implemented as a recording medium including a computer-readable instruction such as a computer-executable program module. The computer-readable recording medium may be an arbitrary available medium accessible by a computer, and examples thereof include all volatile and non-volatile media and separable and non-separable media. Further, examples of the computer-readable recording medium may include a computer storage medium and a communication medium. Examples of the computer storage medium include all volatile and non-volatile media and separable and non-separable media, which have been implemented by an arbitrary method or technology, for storing information such as computer-readable instructions, data structures, program modules, and other data. The communication medium generally includes a computer-readable instruction, a data structure, a program module, other data of a modulated data signal, or another transmission mechanism, and an example thereof includes an arbitrary information transmission medium.

Also, the term "unit" used herein may be a hardware component such as a processor or a circuit and/or a software component executed in a hardware component such as a processor.

While the disclosure has been particularly shown and described with reference to embodiments thereof, it will be understood by one of ordinary skill in the art that various changes in form and details may be made therein without departing from the scope of the disclosure as defined by the following claims. For example, each component described in a single type may be executed in a distributed manner, and components described distributed may also be executed in an integrated form.

## Claims

1. An image display apparatus comprising:
a display (230);
a memory (210) storing instructions; and
a processor (220) configured to execute the instructions stored in the memory (210), which when executed cause the processor (220) to:
control the display (230) to output video content;
receive a first user input configured to select a frame (111) from among a plurality of frames constituting the video content;
receive a second user input configured to select an object (110) included within the frame (111);
recognize the object (110);
determine a plurality of candidate frames (120) which are recognized as including the selected object (110) from among the plurality of frames, based on there being a high similarity between the selected object (110) and one or more objects included within each of the plurality of frames;
determine a recommendation score of each of the plurality of candidate frames by using a learning model including one or more neural networks, the learning model determining the recommendation score of each of the plurality of candidate frames, based on at least one of a size of the selected object, a brightness of the selected object, or a focus of the selected object in a plurality of candidate frames, wherein the recommendation score corresponds to the at least one of the size of the selected object, the brightness of the selected object, or the amount that the selected object is in focus in the plurality of candidate frames;
determine a recommended frame (130) that includes an optimal image of the selected object (110) from the plurality of candidate frames (120), wherein the recommended frame (130) is the candidate frame with the highest recommendation score from the recommendation scores of the plurality of candidate frames (120); and
control the display (230) to output the recommended frame (130) that includes the optimal image of the selected object (110).

2. The image display apparatus of claim 1, wherein the learning model is determined by, in response to inputting of a plurality of learning images to the one or more neural networks, training a method of determining a recommended image from the plurality of learning images.

3. The image display apparatus of claim 1, wherein the learning model is determined by, in response to inputting of a plurality of learning images to the one or more neural networks, determining a recommendation score of each of the plurality of learning images.

4. The image display apparatus of claim 1, wherein the processor when executing the instructions is further configured to:
track the object in a plurality of frames continuous from the frame; and
based on a tracking result, determine the plurality of candidate frames.

5. The image display apparatus of claim 1, wherein the processor when executing the instructions is further configured to:
recognize a plurality of objects in the frame; and
wherein the user input is an input for selecting the object from among the recognized objects.

6. A method of operating an image display apparatus, the method comprising:
outputting video content;
receiving a first user input configured to select a frame (111) from among a plurality of frames constituting the video content;
receiving a second user input configured to select an object (110) included within the frame (111);
recognizing the object (110);
determining a plurality of candidate frames (120) which are recognized as including the selected object (110) from among the plurality of frames, based on there being a high similarity between the selected object (110) and one or more objects included within each of the plurality of frames;
determining a recommendation score of each of the plurality of candidate frames by using a learning model including one or more neural networks, the learning model determining the recommendation score of each of the plurality of candidate frames, based on at least one of a size of the selected object, a brightness of the selected object, or a focus of the selected object in the plurality of candidate frames, wherein the recommendation score corresponds to the at least one of the size of the selected object, the brightness of the selected object, or the amount that the selected object is in focus in the plurality of candidate frames;
determining a recommended frame (130) that includes an optimal image of the selected object (110) from the plurality of candidate frames (120), wherein the recommended frame (130) is the candidate frame with the highest recommendation score from the recommendation scores of the plurality of candidate frames (120); and
outputting the recommended frame (130) that includes the optimal image of the selected object (110).

7. The method of claim 6, wherein the learning model is determined by, in response to inputting of a plurality of learning frames to the one or more neural networks, determining the recommended frame from the plurality of learning frames.

8. The method of claim 6, wherein the learning model is determined by, in response to inputting of a plurality of learning frames to the one or more neural networks, learning a method of calculating a recommendation score of each of the plurality of learning frames.

## Patentansprüche

1. Bildanzeigevorrichtung, umfassend:
eine Anzeige (230);
einen Speicher (210), der Anweisungen speichert; und
einen Prozessor (220), der dazu konfiguriert ist, die in dem Speicher (210) gespeicherten Anweisungen auszuführen, die bei Ausführung den Prozessor (220) veranlassen zum:
Steuern der Anzeige (230), um einen Videoinhalt auszugeben;
Empfangen einer ersten Benutzereingabe, die dazu konfiguriert ist, einen Frame (111) aus einer Vielzahl von Frames auszuwählen, die den Videoinhalt bilden;
Empfangen einer zweiten Benutzereingabe, die dazu konfiguriert ist, ein Objekt (110) auszuwählen, das in dem Frame (111) enthalten ist;
Erkennen des Objektes (110);
Bestimmen einer Vielzahl von Kandidaten-Frames (120), für die erkannt wird, dass sie das ausgewählte Objekt (110) enthalten, aus der Vielzahl von Frames, basierend darauf, dass eine hohe Ähnlichkeit zwischen dem ausgewählten Objekt (110) und einem oder mehreren Objekten, die in jedem der Vielzahl von Frames enthalten sind, besteht;
Bestimmen einer Empfehlungspunktzahl für jeden der Vielzahl von Kandidaten-Frames unter Verwendung eines Lernmodells, das ein oder mehrere neuronale Netze enthält, wobei das Lernmodell die Empfehlungspunktzahl jedes der Vielzahl von Kandidaten-Frames basierend auf mindestens einem von einer Größe des ausgewählten Objektes, einer Helligkeit des ausgewählten Objektes oder einem Fokus des ausgewählten Objektes in einer Vielzahl von Kandidaten-Frames bestimmt, wobei die Empfehlungspunktzahl mindestens einem von der Größe des ausgewählten Objektes, der Helligkeit des ausgewählten Objektes oder der Menge, in der das ausgewählte Objekt in der Vielzahl von Kandidaten-Frames im Fokus ist, entspricht;
Bestimmen eines empfohlenen Frames (130), der ein optimales Bild des ausgewählten Objektes (110) enthält, aus der Vielzahl von Kandidaten-Frames (120), wobei der empfohlene Frame (130) der Kandidaten-Frame mit der höchsten Empfehlungspunktzahl von den Empfehlungspunktzahlen der Vielzahl von Kandidaten-Frames (120) ist; und
Steuern der Anzeige (230), um den empfohlenen Frame (130) auszugeben, der das optimale Bild des ausgewählten Objektes (110) enthält.

2. Bildanzeigevorrichtung nach Anspruch 1, wobei das Lernmodell als Reaktion auf ein Eingeben einer Vielzahl von Lernbildern in das eine oder die mehreren neuronalen Netze durch Trainieren eines Verfahrens zum Bestimmen eines empfohlenen Bildes aus der Vielzahl von Lernbildern bestimmt wird.

3. Bildanzeigevorrichtung nach Anspruch 1, wobei das Lernmodell als Reaktion auf ein Eingeben einer Vielzahl von Lernbildern in das eine oder die mehreren neuronalen Netze durch Bestimmen einer Empfehlungspunktzahl jedes der Vielzahl von Lernbildern bestimmt wird.

4. Bildanzeigevorrichtung nach Anspruch 1, wobei der Prozessor beim Ausführen der Anweisungen ferner konfiguriert ist zum:
Verfolgen des Objektes in einer Vielzahl von Frames, die von dem Frame aus fortlaufend sind; und
basierend auf einem Ergebnis des Verfolgens, Bestimmen der Vielzahl von Kandidaten-Frames.

5. Bildanzeigevorrichtung nach Anspruch 1, wobei der Prozessor beim Ausführen der Anweisungen ferner konfiguriert ist zum:
Erkennen einer Vielzahl von Objekten in dem Frame; und
wobei die Benutzereingabe eine Eingabe zum Auswählen des Objektes aus den erkannten Objekten ist.

6. Verfahren zum Betreiben einer Bildanzeigevorrichtung, wobei das Verfahren Folgendes umfasst:
Ausgeben eines Videoinhalts;
Empfangen einer ersten Benutzereingabe, die dazu konfiguriert ist, einen Frame (111) aus einer Vielzahl von Frames auszuwählen, die den Videoinhalt bilden;
Empfangen einer zweiten Benutzereingabe, die dazu konfiguriert ist, ein Objekt (110) auszuwählen, das in dem Frame (111) enthalten ist;
Erkennen des Objektes (110);
Bestimmen einer Vielzahl von Kandidaten-Frames (120), für die erkannt wird, dass sie das ausgewählte Objekt (110) enthalten, aus der Vielzahl von Frames, basierend darauf, dass eine hohe Ähnlichkeit zwischen dem ausgewählten Objekt (110) und einem oder mehreren Objekten, die in jedem der Vielzahl von Frames enthalten sind, besteht;
Bestimmen einer Empfehlungspunktzahl für jeden der Vielzahl von Kandidaten-Frames unter Verwendung eines Lernmodells, das ein oder mehrere neuronale Netze enthält, wobei das Lernmodell die Empfehlungspunktzahl jedes der Vielzahl von Kandidaten-Frames basierend auf mindestens einem von einer Größe des ausgewählten Objektes, einer Helligkeit des ausgewählten Objektes oder einem Fokus des ausgewählten Objektes in der Vielzahl von Kandidaten-Frames bestimmt, wobei die Empfehlungspunktzahl mindestens einem von der Größe des ausgewählten Objektes, der Helligkeit des ausgewählten Objektes oder der Menge, in der das ausgewählte Objekt in der Vielzahl von Kandidaten-Frames im Fokus ist, entspricht;
Bestimmen eines empfohlenen Frames (130), der ein optimales Bild des ausgewählten Objektes (110) enthält, aus der Vielzahl von Kandidaten-Frames (120), wobei der empfohlene Frame (130) der Kandidaten-Frame mit der höchsten Empfehlungspunktzahl von den Empfehlungspunktzahlen der Vielzahl von Kandidaten-Frames (120) ist; und
Ausgeben des empfohlenen Frames (130), der das optimale Bild des ausgewählten Objektes (110) enthält.

7. Verfahren nach Anspruch 6, wobei das Lernmodell, als Reaktion auf ein Eingeben einer Vielzahl von Lern-Frames in das eine oder die mehreren neuronalen Netze, durch Bestimmen des empfohlenen Frames aus der Vielzahl von Lern-Frames bestimmt wird.

8. Verfahren nach Anspruch 6, wobei das Lernmodell, als Reaktion auf ein Eingeben einer Vielzahl von Lern-Frames in das eine oder die mehreren neuronalen Netze durch Lernen eines Verfahrens zum Berechnen einer Empfehlungspunktzahl jedes der Vielzahl von Lern-Frames bestimmt wird.

## Revendications

1. Appareil d'affichage d'images comprenant :
un affichage (230) ;
une mémoire (210) stockant des instructions ; et
un processeur (220) configuré pour exécuter les instructions stockées dans la mémoire (210), qui, lorsqu'elles sont exécutées, amènent le processeur (220) à :
commander à l'affichage (230) de sortir un contenu vidéo ;
recevoir une première entrée utilisateur configurée pour sélectionner une trame (111) parmi une pluralité de trames constituant le contenu vidéo ;
recevoir une seconde entrée utilisateur configurée pour sélectionner un objet (110) inclus dans la trame (111) ;
reconnaître l'objet (110) ;
déterminer une pluralité de trames candidates (120) qui sont reconnues comme incluant l'objet sélectionné (110) parmi la pluralité de trames, sur la base de l'existence d'une grande similarité entre l'obj et sélectionné (110) et un ou plusieurs objets inclus dans chacune de la pluralité de trames ;
déterminer un score de recommandation de chacune de la pluralité de trames candidates en utilisant un modèle d'apprentissage comprenant un ou plusieurs réseaux neuronaux, le modèle d'apprentissage déterminant le score de recommandation de chacune de la pluralité de trames candidates, sur la base d'au moins l'un d'une taille de l'objet sélectionné, d'une luminosité de l'objet sélectionné, ou d'une mise au point de l'objet sélectionné dans une pluralité de trames candidates, dans lequel le score de recommandation correspond à l'au moins un de la taille de l'objet sélectionné, de la luminosité de l'objet sélectionné, ou de la quantité selon laquelle la mise au point est faite sur l'objet sélectionné dans la pluralité de trames candidates ;
déterminer une trame recommandée (130) qui comprend une image optimale de l'objet sélectionné (110) parmi la pluralité de trames candidates (120), dans lequel la trame recommandée (130) est la trame candidate avec le score de recommandation le plus élevé parmi les scores de recommandation de la pluralité de trames candidates (120) ; et
commander à l'affichage (230) de sortir la trame recommandée (130) qui comprend l'image optimale de l'objet sélectionné (110).

2. Appareil d'affichage d'images selon la revendication 1, dans lequel le modèle d'apprentissage est déterminé, en réponse à l'entrée d'une pluralité d'images d'apprentissage dans l'un ou plusieurs réseaux neuronaux, par l'apprentissage d'un procédé de détermination d'une image recommandée parmi la pluralité d'images d'apprentissage.

3. Appareil d'affichage d'images selon la revendication 1, dans lequel le modèle d'apprentissage est déterminé, en réponse à l'entrée d'une pluralité d'images d'apprentissage dans l'un ou plusieurs réseaux neuronaux, par la détermination d'un score de recommandation de chacune de la pluralité d'images d'apprentissage.

4. Appareil d'affichage d'images selon la revendication 1, dans lequel le processeur lors de l'exécution des instructions est en outre configuré pour :
suivre l'objet dans une pluralité de trames continues à partir de la trame ; et
sur la base d'un résultat de suivi, déterminer la pluralité de trames candidates.

5. Appareil d'affichage d'images selon la revendication 1, dans lequel le processeur lors de l'exécution des instructions est en outre configuré pour :
reconnaître une pluralité d'objets dans la trame ; et
dans lequel l'entrée utilisateur est une entrée pour sélectionner l'objet parmi les objets reconnus.

6. Procédé de fonctionnement d'un appareil d'affichage d'images, le procédé comprenant :
la sortie d'un contenu vidéo ;
la réception d'une première entrée utilisateur configurée pour sélectionner une trame (111) parmi une pluralité de trames constituant le contenu vidéo ;
la réception d'une seconde entrée utilisateur configurée pour sélectionner un objet (110) inclus dans la trame (111) ;
la reconnaissance de l'objet (110);
la détermination d'une pluralité de trames candidates (120) qui sont reconnues comme incluant l'objet sélectionné (110) parmi la pluralité de trames, sur la base de l'existence d'une grande similarité entre l'objet sélectionné (110) et un ou plusieurs objets inclus dans chacune de la pluralité de trames ;
la détermination d'un score de recommandation de chacune de la pluralité de trames candidates à l'aide d'un modèle d'apprentissage comprenant un ou plusieurs réseaux neuronaux, le modèle d'apprentissage déterminant le score de recommandation de chacune de la pluralité de trames candidates, sur la base d'au moins l'un d'une taille de l'objet sélectionné, d'une luminosité de l'objet sélectionné, ou d'une mise au point sur l'objet sélectionné dans la pluralité de trames candidates, dans lequel le score de recommandation correspond à l'au moins un de la taille de l'objet sélectionné, de la luminosité de l'objet sélectionné, ou de la quantité selon laquelle la mise au point est faite sur l'objet sélectionné dans la pluralité de trames candidates ;
la détermination d'une trame recommandée (130) qui comprend une image optimale de l'objet sélectionné (110) parmi la pluralité de trames candidates (120), dans lequel la trame recommandée (130) est la trame candidate avec le score de recommandation le plus élevé parmi les scores de recommandation de la pluralité de trames candidates (120) ; et
la sortie de la trame recommandée (130) qui comprend l'image optimale de l'objet sélectionné (110).

7. Procédé selon la revendication 6, dans lequel le modèle d'apprentissage est déterminé, en réponse à l'entrée d'une pluralité de trames d'apprentissage dans l'un ou plusieurs réseaux neuronaux, par la détermination de la trame recommandée parmi la pluralité de trames d'apprentissage.

8. Procédé selon la revendication 6, dans lequel le modèle d'apprentissage est déterminé, en réponse à l'entrée d'une pluralité de trames d'apprentissage dans l'un ou plusieurs réseaux neuronaux, par l'apprentissage d'un procédé de calcul d'un score de recommandation de chacune de la pluralité de trames d'apprentissage.
